(19) **Europäisches Patentamt / European Patent Office / Office européen des brevets**

(11) **EP 4 584 555 B1**

(12) **EUROPÄISCHE PATENTSCHRIFT**

(45) Veröffentlichungstag und Bekanntmachung des Hinweises auf die Patenterteilung:
**01.07.2026 Patentblatt 2026/27**

(21) Anmeldenummer: **23794308.9**

(22) Anmeldetag: **23.10.2023**

(51) Internationale Patentklassifikation (IPC):
*G01B 21/20* (2006.01)   *B26D 5/00* (2006.01)
*G06N 3/08* (2023.01)   *G01B 11/24* (2006.01)

(52) Gemeinsame Patentklassifikation (CPC):
**G01B 21/20; G06N 3/08;** B26D 5/007;
G01B 2210/44

(86) Internationale Anmeldenummer:
**PCT/EP2023/079401**

(87) Internationale Veröffentlichungsnummer:
**WO 2024/088927 (02.05.2024 Gazette 2024/18)**

(54) **VERFAHREN ZUR IDENTIFIZIERUNG VON ANOMALIEN UND SOMIT AUCH TATSÄCHLICHEN BEARBEITUNGSPOSITIONEN EINER BAHN SOWIE ZUR KLASSIFIZIERUNG DIESER ANOMALIEN, ANLAGE UND COMPUTERPROGRAMMPRODUKT**

METHOD FOR IDENTIFYING ANOMALIES AND THUS ALSO ACTUAL MACHINING POSITIONS OF A WEB AND FOR CLASSIFYING SAID ANOMALIES, SYSTEM, AND COMPUTER PROGRAMME PRODUCT

PROCÉDÉ D'IDENTIFICATION D'ANOMALIES ET AINSI DE POSITIONS D'USINAGE RÉELLES D'UNE BANDE ET DE CLASSIFICATION DESDITES ANOMALIES, SYSTÈME ET PRODUIT-PROGRAMME INFORMATIQUE

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorität: **25.10.2022 DE 102022211293**

(43) Veröffentlichungstag der Anmeldung:
**16.07.2025 Patentblatt 2025/29**

(73) Patentinhaber: **BHS Corrugated Maschinen- und Anlagenbau GmbH**
**92729 Weiherhammer (DE)**

(72) Erfinder:
- **LÖHNERT, Madeleine**
  **90584 Allersberg (DE)**
- **MÜNSTER, Thomas**
  **92249 Vilseck (DE)**
- **TRENZ, Stefan**
  **91284 Neuhaus (DE)**

(74) Vertreter: **FDST Patentanwälte**
**Nordostpark 16**
**90411 Nürnberg (DE)**

(56) Entgegenhaltungen:
DE-A1- 102019 105 217    DE-A1- 102019 110 721
KR-B1- 102 358 948    US-A- 5 581 353

**Beschreibung**

Die Erfindung betrifft ein Verfahren zur Identifizierung von Anomalien, insbesondere Schnitten und/oder Rillungen, und somit auch tatsächlichen Bearbeitungspositionen einer Bahn, insbesondere Wellpappenbahn, sowie zur Klassifizierung dieser Anomalien. Weiterhin betrifft die Erfindung eine Anlage und ein Computerprogrammprodukt.

Die Bahn ist beispielsweise eine Wellpappenbahn und dann aus mehreren Papierlagen zusammengesetzt. Die Anlage ist beispielsweise eine Wellpappenanlage, mit welcher die Bahn zunächst hergestellt und danach noch weiterbearbeitet wird. Regelmäßig wird die Bahn derart bearbeitet, dass in diese mit einer Schneid- und Rilleinheit eine Anzahl an Schnitten und/oder Rillungen eingebracht wird, um die Bahn einerseits durch geeignete Schnitte in mehrere voneinander getrennte Nutzen und anschließend Bögen zu zerteilen und um andererseits die Bögen jeweils durch geeignete Rillungen mit einer Anzahl an Knick-, Falz-, Trennkanten oder dergleichen auszustatten, sodass der jeweilige Bogen dann von einer ursprünglich flachen Form in eine typischerweise dreidimensionale Endform überführbar ist (z.B. eine Schachtel oder Box).

Für eine möglichst wirtschaftliche und ökologische Herstellung einer Wellpappenbahn sowie Nutzen und Bögen daraus ist es wünschenswert, wenn während der Herstellung und Bearbeitung möglichst wenig Ausschuss produziert wird. Ausschuss entsteht regelmäßig dann, wenn Schnitte und/oder Rillungen fehlerhaft oder gar nicht gesetzt wurden. Je frühzeitiger und zuverlässiger etwaige Mängel bei der Einbringung von Schnitten und/oder Rillungen erkannt werden, desto weniger Ausschuss fällt an und desto zielgerichteter kann entsprechend reagiert werden, z.B. ein Werkzeug ausgetauscht oder ein Betriebsparameter angepasst werden.

Die DE 10 2015 200 397 A1 beschreibt eine Prüfeinrichtung zum Prüfen der Qualität von Bearbeitungsergebnissen einer Bearbeitungseinrichtung für Substratbögen, aufweisend: eine Lichtquelle zum Beleuchten eines von der Bearbeitungseinrichtung mittels eines Bearbeitungswerkzeugs strukturverändernd mechanisch bearbeiteten Bearbeitungsabschnitts eines Substratbogens, einen Bildsensor, der eingerichtet ist, den beleuchteten Bearbeitungsabschnitt bildgebend zu erfassen und auf dieser Basis Istbilddaten des Bearbeitungsabschnitts zu erzeugen. Weiter ist eine Auswertevorrichtung vorhanden, die eingerichtet ist, ein Auswertungsergebnis für die Qualität der Bearbeitungsergebnisse auszugeben, wobei in der Auswertevorrichtung Solldaten für den bearbeiteten Bearbeitungsabschnitt gespeichert sind und die Auswertevorrichtung eingerichtet ist, die Istbilddaten des Bearbeitungsabschnitts unter vorbestimmten Auswertungskriterien mit den Solldaten zu vergleichen und auf Basis eines daraus resultierenden Vergleichsergebnisses Korrekturdaten für die Bearbeitungsparameter als Bestandteil des Auswertungsergebnisses zu ermitteln.

Die DE 10 2019 105 217 A1 beschreibt eine Faltmaschine für Faltschachtelzuschnitte umfassend mindestens ein Steuergerät, Mittel zum Befördern der Faltschachtelzuschnitte von einem Eingang zu einem Ausgang der Faltmaschine, eine Vorrichtung zum Falten der Faltschachtelzuschnitte und eine Ausrichteinheit für gefaltete Faltschachtelzuschnitte. Die Faltmaschine weist eine Vorrichtung zur optischen Erfassung von Rillungen und/oder Spalten der Faltschachtelzuschnitte auf und eine Vorrichtung zur optischen Erfassung von Rillungen in Transportrichtung ist vor den Mitteln zum Falten der Faltschachtelzuschnitte angeordnet und/oder eine Vorrichtung zur optischen Erfassung von Spalten ist in Transportrichtung hinter den Mitteln zum Falten der Faltschachtelzuschnitte und vor der Ausrichteinheit angeordnet.

Die US 5,581,353 A beschreibt eine Vorrichtung zum Messen von mindestens zwei Eigenschaften von Wellpappe, wobei die Vorrichtung umfasst: mindestens ein Paar Lasertriangulationssensoren, wobei einer der Sensoren auf einer Seite der Wellpappe angeordnet ist und der zweite Sensor auf einer gegenüberliegenden Seite. Der Abstand zwischen dem jeweiligen Sensor und der Oberfläche der Wellpappe wird gemessen und in mindestens zwei Eigenschaften der Wellpappe umgewandelt.

Weiter wird verwiesen auf DE 10 2019 110 721 A1, KR 102 358 948 B1.

Vor diesem Hintergrund ist es eine Aufgabe der Erfindung, die Überprüfung der Bearbeitung einer Bahn durch eine Schneid-/Rilleinheit zu verbessern. Hierzu sollen ein entsprechendes Verfahren, eine Anlage und ein Computerprogrammprodukt angegeben werden.

Die Aufgabe wird erfindungsgemäß gelöst durch ein Verfahren mit den Merkmalen gemäß Anspruch 1, durch eine Anlage mit den Merkmalen gemäß Anspruch 14 sowie durch ein Computerprogrammprodukt mit den Merkmalen gemäß Anspruch 15. Vorteilhafte Ausgestaltungen, Weiterbildungen und Varianten sind Gegenstand der Unteransprüche. Die Ausführungen im Zusammenhang mit dem Verfahren gelten sinngemäß auch für die Anlage sowie das Computerprogrammprodukt und umgekehrt. Vorteilhafte Ausgestaltungen für die Anlage ergeben sich dadurch, dass diese ausgestaltet ist, zumindest Teile des Verfahrens oder einen oder mehrere Schritte des Verfahrens auszuführen. Hierzu weist die Anlage dann eine geeignet ausgebildete Steuereinheit auf. Analog ergeben sich vorteilhafte Ausgestaltungen für das Computerprogrammprodukt dadurch, dass dieses Befehle aufweist, welche bei der Ausführung durch einen Computer diesen veranlassen zumindest Teile des Verfahrens oder einen oder mehrere Schritte des Verfahrens auszuführen.

Das Verfahren ist insbesondere ein Verfahren zur Identifizierung von Anomalien und somit auch tatsächlichen Bearbeitungspositionen einer Bahn sowie zur Klassifizierung dieser Anomalien. Das Verfahren ermöglicht insbesondere eine verbesserte Überprüfung von Bearbeitungen einer Schneid-/Rilleinheit und insbesondere auch eine verbesserte Überprüfung von Bearbeitungspositionen dieser Bearbeitungen, d.h. von Schnitt- und/oder Rillpositionen. Zunächst wird eine Bahn bereitgestellt, in welche mittels einer Schneid-/Rilleinheit eine Anzahl von Bearbeitungen eingebracht wurde, jeweils anhand einer vorgegebenen Bearbeitungsposition und einem vorgegebenen Schnitttyp oder Rilltyp (allgemein "Bearbeitungstyp"). Unter "eine Anzahl von" wird hier und auch allgemein "ein oder mehrere" oder "wenigstens ein/eine" verstanden. Die Bearbeitungen sind mechanische Bearbeitungen der Bahn und jeweils entweder ein Schnitt oder eine Rillung in der Bahn. Jeder Schnitt wurde gemäß einem vorgegebenen Schnitttyp erzeugt und jede Rillung gemäß einem vorgegebenen Rilltyp. Die Schneid-/Rilleinheit dient demnach zum Einbringen von Schnitten und/oder Rillungen in die Bahn. Ein Schnitt stellt eine Trennstelle dar, an welcher die Bahn durchtrennt ist. Demgegenüber stellt eine Rillung zunächst nur eine Prägestelle, insbesondere Sollknickstelle (oder Vergleichbares) in der Bahn dar, welche ein Falten eines fertigen Nutzens oder Bogens entlang ebendieser Sollknickstelle erlaubt. Entsprechend unterscheiden sich Schnitte und Rillungen insbesondere dadurch, dass bei einem Schnitt die Bahn vollständig durchtrennt wird, was bei einer Rillung nicht oder nur teilweise der Fall ist. Die Schnitte und/oder Rillungen dienen insbesondere zur Konfektionierung der Bahn in einzelne Nutzen oder Bögen und/oder zur Ausbildung von Bruch-, Falz- oder Knickkanten der Nutzen oder der späteren Bögen, z.B. um diese jeweils zu einer Schachtel, Box oder ähnlichem zu formen.

Unter Schneid-/Rilleinheit wird insbesondere eine Schneid- und/oder Rilleinheit verstanden, d.h. eine Einheit welche entweder zum Schneiden der Bahn oder zum Rillen der Bahn ausgebildet ist oder beides. Nachfolgend wird ohne Beschränkung der Allgemeinheit von einer Schneid- und Rilleinheit ausgegangen, mit welcher die Bahn sowohl geschnitten als auch gerillt wird. Die Schneid-/Rilleinheit ist insbesondere ein Teil einer Anlage zur Verarbeitung der Bahn. Vorzugsweise ist die Anlage eine Wellpappenanlage, zur Herstellung von Wellpappe, insbesondere Bögen aus Wellpappe. Die Bahn ist insbesondere aus Papier hergestellt und vorzugsweise eine Wellpappenbahn, welche aus mehreren Papierlagen zusammengesetzt ist. Vorzugsweise ist die Schneid-/Rilleinheit ein Teil der Wellpappenanlage und die Bahn ist eine Wellpappenbahn, welche mit der Wellpappenanlage hergestellt und verarbeitet wird. In einer geeigneten Ausgestaltung ist die Schneid-/Rilleinheit stromab eines sogenannten Double-Facers der Anlage angeordnet. Im Double-Facer werden mehrere Zwischenprodukte für eine Wellpappenbahn zur tatsächlichen Wellpappenbahn zusammengesetzt. Der Double-Facer markiert insbesondere auch das Ende eines sogenannten "Wet Ends" der Anlage (und gehört noch zu diesem), woran sich ein sogenanntes "Dry End" anschließt, mit welchem eine Konfektionierung der Wellpappenbahn insbesondere in einzelne Nutzen und anschließend in einzelne Bögen erfolgt. Die Schneid-/Rilleinheit ist insbesondere ein Teil des Dry Ends der Anlage. Nachfolgend wird ohne Beschränkung der Allgemeinheit davon ausgegangen, dass die Bahn eine Wellpappenbahn ist. Eine solche Ausgestaltung ist zwar bevorzugt, die hier gemachten Ausführungen gelten aber grundsätzlich für jede beliebige Bahn, insbesondere aus Papier, gegebenenfalls auch nur einlagig, und auch für jede Anlage, welche eine Bahn verarbeitet.

Die Bahn wird mittels der Schneid-/Rilleinheit an einer Anzahl von tatsächlichen Bearbeitungspositionen (d.h. Schnitt- und/oder Rillpositionen) bearbeitet. An jeder tatsächlichen Bearbeitungsposition ist durch die Bearbeitung prinzipbedingt eine insbesondere charakteristische Anomalie ausgebildet. Durch eine Identifizierung der Anomalien (wie weiter unten im Detail erläutert) werden somit automatisch die tatsächlichen Bearbeitungspositionen identifiziert, d.h. erkannt, welche dann auch als erkannte Bearbeitungspositionen bezeichnet werden. Die Bearbeitungspositionen sind insbesondere durch Auftragsdaten für einen Auftrag für die Anlage zur Bearbeitung der Bahn vorgegeben. Entsprechend enthalten die Auftragsdaten dann eine Anzahl von vorgegebenen Bearbeitungspositionen. Auch der an einer jeweiligen vorgegebenen Bearbeitungsposition auszuführende Schnitt- oder Rilltyp ist in den Auftragsdaten vorgegeben, sodass in den Auftragsdaten jeder vorgegebenen Bearbeitungsposition auch ein vorgegebener Schnitt- oder Rilltyp zugeordnet ist. Die Schneid-/Rilleinheit wird gemäß den Auftragsdaten angesteuert. Aufgrund von Fehlern oder Ungenauigkeiten erzeugt die Schneid-/Rilleinheit jedoch die Bearbeitungen nicht zwingend an den vorgegebenen Bearbeitungspositionen, sondern an den tatsächlichen Bearbeitungspositionen, und möglicherweise wird auch der jeweils geforderte Schnitt- oder Rilltyp nicht exakt reproduziert oder sogar ein falscher Schnitt- oder Rilltyp verwendet. Mit anderen Worten: die Schnitte und Rillungen, welche tatsächlich erzeugt werden, liegen nicht notwendigerweise exakt an den vorgegebenen Bearbeitungspositionen und auch die Ausführung eines Schnitts oder einer Rillung kann fehlerhaft sein, sodass an einer Bearbeitungsposition ein falscher Schnitttyp oder Rilltyp erzeugt wird. Vorteilhafterweise wird daher das Ergebnis der Bearbeitung überprüft. Darüber hinaus geht eine Anomalie auch nicht zwingend auf eine Bearbeitung mit der Schneid-/Rilleinheit zurück, sondern kann auch durch eine anderweitige Bearbeitung oder eine Beschädigung erzeugt werden. Auch diese Anomalien und eine jeweils zugehörige tatsächliche Bearbeitungsposition werden erkannt, letztere ist jedoch keiner vorgegebenen Bearbeitungsposition zugeordnet, auch entspricht die Anomalie nicht zwingend einem bekannten Schnitt- oder Rilltyp. Daher wird vorteilhafterweise die Überprüfung derart gestaltet, dass solche Anomalien nicht fälschlicherweise als vorgegebene Bearbeitungen identifiziert werden. Vorteilhafterweise werden die Anomalien unabhängig voneinander ausgewertet und charakterisiert, d.h. insgesamt klassifiziert, sodass Fehlschlüsse (z.B. ausgehend von der Annahme, dass alle Anomalien Schnitte oder Rillungen sind) von vornherein möglichst vermieden werden.

Bei dem hier beschriebenen Verfahren wird mit einer Sensoreinheit auf zumindest einer Seite der Bahn, vorzugsweise auf beiden Seiten der Bahn, und quer zu einer Förderrichtung (d.h. auch Längsrichtung) der Bahn ein Höhenprofil der Bahn gemessen. Die Sensoreinheit ist vorzugsweise ein Teil der Anlage. Bevorzugterweise wird das Höhenprofil in der Anlage inline und stromab der Schneid-/Rilleinheit gemessen. Die Bahn weist senkrecht zur Förderrichtung eine Breite auf und das Höhenprofil erstreckt sich vorzugsweise über die gesamte Breite. Das Höhenprofil wird auch als Querprofil bezeichnet, da es allgemein quer und vorzugsweise - jedoch nicht zwingend - senkrecht zur Förderrichtung gemessen wird. Das Höhenprofil wird auch als Oberflächenkontur bezeichnet, da es die Kontur einer Oberfläche der Bahn wiedergibt. Grundsätzlich kann es - wie beschrieben - bei der Bearbeitung zu Abweichungen zwischen den Vorgaben gemäß den Auftragsdaten kommen. Das Bearbeiten mit der Schneid-/Rilleinheit erzeugt charakteristische Veränderungen im Höhenprofil der Bahn, wodurch sich die tatsächlichen Bearbeitungspositionen und die dort ausgeführten Bearbeitungen durch Messen und Auswerten des Höhenprofils erkennen und überprüfen lassen. Das Höhenprofil wird beispielsweise mit einem Abstandssensor gemessen und gibt dann den Abstand zwischen der Bahn und dem Sensor als Funktion entlang einer Querrichtung quer zur Förderrichtung an. Das Höhenprofil lässt sich insbesondere als Vektor mit einer Vielzahl an Messwerten, jeweils an einer anderen Position in Querrichtung, darstellen. Ein jeweiliger Messwert und eine jeweilige Position (d.h. Positionswert) bilden zusammen einen Datenpunkt, die Länge des Vektors entspricht der Anzahl an Datenpunkten.

In dem Höhenprofil sind die Bearbeitungen durch die Schneid-/Rilleinheit als Anomalien an tatsächlichen Bearbeitungspositionen erkennbar, d.h. als Abweichungen z.B. von einem Normalzustand der Bahn, d.h. einer Bahn ohne Bearbeitungen. In dem Höhenprofil wird daher nun eine Anzahl von Anomalien und somit auch tatsächlichen Bearbeitungspositionen identifiziert, indem solche Ausschnitte des Höhenprofils jeweils als eine Anomalie identifiziert werden, in welchen das Höhenprofil einen vorgegebenen (ersten) Schwellwert erreicht, insbesondere über- oder unterschreitet. Eine jeweilige Anomalie ist demnach ein Ausschnitt des Höhenprofils und somit zweidimensional, d.h. enthält mehrere Datenpunkte (Messwerte und Positionswerte). Jede Anomalie entspricht einer tatsächlichen Bearbeitungspositionen, welche die Positionen des entsprechenden Ausschnitts enthält, d.h. nur die Positionswerte einer jeweiligen Anomalie, und dadurch eindimensional und sozusagen ein Positionsintervall oder Positionsbereich ist. Durch die Verwendung eines Schwellwerts kommt es auf eine Definition des Normalzustands nicht an, vielmehr gibt der Schwellwert an, was als normal/nicht-normal angesehen wird. Ein jeweiliger Ausschnitt ist insbesondere eine zusammenhängende Menge an Datenpunkten. Ein jeweiliger Ausschnitt ist zweckmäßigerweise nicht lediglich derjenige Bereich, in welchem das Höhenprofil tatsächlich den Schwellwert erreicht, sondern enthält eine bestimmte Zugabe insbesondere nach beiden Seiten. Die Zugabe ist zweckmäßigerweise derart bemessen, dass die Anomalie, welche entlang des Höhenprofils regelmäßig schon vor Erreichen des Schwellwerts beginnt, möglichst vollständig von dem Ausschnitt erfasst ist.

Eine jeweilige Anomalie wird dann mittels einer Klassifizierung klassifiziert, indem die Anomalie demjenigen Schnitt- und/oder Rilltyp zugeordnet wird, welchem die Anomalie am ähnlichsten ist. Es wird also nicht lediglich geprüft, ob oder wie sehr eine jeweilige Bearbeitung dem Schnitt- oder Rilltyp gemäß den Auftragsdaten entspricht, sondern es wird geprüft, welcher Schnitt- oder Rilltyp tatsächlich vorliegt. Die Prüfung ist zunächst insbesondere unabhängig von den Auftragsdaten. Die Klassifizierung unterscheidet sich somit von einem einfachen Soll/Ist-Abgleich insbesondere dadurch, dass die Anomalie nicht lediglich mit einem einzelnen Schnitt- oder Rilltyp verglichen wird, sondern mit mehreren verschiedenen. Außerdem wird vorliegend insbesondere durch Verwendung des Schwellwerts aktiv nach Anomalien im gesamten Höhenprofil gesucht und nicht lediglich das Höhenprofil an den vorgegebenen Bearbeitungspositionen untersucht, sodass auch nicht vorgegebene Bearbeitungen (z.B. Beschädigungen) gefunden werden und vorteilhaft auch klassifiziert werden. Insgesamt wird demnach die Überprüfung der Bearbeitung der Bahn verbessert und insbesondere auch eine detailliertere Qualitätskontrolle möglich, als bei einem einfachen Soll/Ist-Abgleich und einer Überprüfung von Bearbeitungspositionen der Schnitte und Rillungen in lediglich vordefinierten Ausschnitten. Dadurch sind vorteilhaft etwaige Fehlschnitte und -Fehlrillungen erkennbar, welche außerhalb der erwarteten Ausschnitte auftreten.

Die hier beschriebene Klassifizierung ist zudem zuverlässiger im Vergleich zu einer einfachen Minimum- oder Maximum-Funktion zur Identifizierung, welche prinzipbedingt dazu führt, dass immer ein Schnitt oder eine Rillung erkannt wird, auch wenn nichts dergleichen erfolgt ist. Außerdem ist vorliegend eine Validierung möglich, bei welcher vorteilhaftweise erkannt wird, ob für eine jeweilige Rillung auch das korrekte Rillprofil (d.h. der korrekte Rillkörper) entsprechend den Auftragsdaten verwendet wurde. Schließlich ist mit dem hier beschriebenen Verfahren auch eine Überprüfung der Bahn auf Beschädigungen abseits der Schnitte und Rillen realisierbar. Insgesamt ist es mit dem hier beschriebenen Verfahren somit möglich, fehlende oder falsch positionierte Schnitte und Rillungen zu erkennen, falsch eingefahrene Schneidkörper und Rillkörper zu erkennen, unzureichend ausgeführte Schnitte und Rillungen zu erkennen sowie Beschädigungen der Bahn zu erkennen. In Reaktion hierauf wird zweckmäßigerweise ein entsprechender Hinweis ausgegeben und/oder ein Bediener der Anlage entsprechend informiert. Optional wird die Anlage (und damit die weitere Bearbeitung der Bahn) gestoppt oder zumindest langsamer gefahren und somit die Produktion von Ausschuss verhindert.

Das hier durchgeführte und beschriebene Verfahren, speziell die Klassifizierung, steht auch im Gegensatz zu den eingangs genannten DE 10 2015 200 397 A1, DE 10 2019 105 217 A1 und US 5,581,353 A. Bei der Klassifizierung wird einem Signalausschnitt des Höhenprofils konkret ein Schnitt- oder Rilltyp zugeordnet. Damit wird der tatsächlich erzeugte Schnitt oder die tatsächlich erzeugte Rillung nicht nur als solches identifiziert, sondern auch der Art (Typ) nach. Zudem wird insbesondere die gesamte Bahn überprüft oder jedenfalls weitreichende Ausschnitte hiervon und nicht nur solche einzelnen Positionen, an welchen Schnitte oder Rillungen erwartet werden.

Zum Schneiden und/oder Rillen weist die Schneid-/Rilleinheit insbesondere einen oder mehrere entsprechende Schneidkörper und/oder Rillkörper auf, d.h. vorzugsweise mehrere Schneidkörper und/oder mehrere Rillkörper, also nicht lediglich eine Kombination aus einem einzelnen Schneidkörper und einem einzelnen Rillkörper. In beiden Fällen erfolgt eine mechanische Bearbeitung der Bahn, im Fall des Schneidens lediglich ein Trennen und im Fall des Rillens eine Umformung. Ein Schneidkörper weist typischerweise ein erstes Messer auf, welches im Betrieb um eine Achse quer zur Bahn rotiert und dann zur Erzeugung eines Schnitts in die Bahn eingefahren wird. Weiter weist der Schneidkörper eine Gegenwalze auf, welche auf der gegenüberliegenden Seite der Bahn angeordnet ist und mit dem ersten Messer zusammenwirkt (denkbar ist grundsätzlich auch ein zweites Messer anstelle der Gegenwalze). Analog weist ein Rillkörper regelmäßig eine erste Walze mit einer ersten profilierten Lauffläche auf, welche im Betrieb um eine Achse quer zur Bahn rotiert und dann zur Erzeugung einer Rillung an die Bahn angedrückt wird. Weiter weist der Rillkörper eine Gegenwalze auf, regelmäßig mit einer zweiten profilierten Lauffläche, welche auf der gegenüberliegenden Seite der Bahn angeordnet ist und mit der ersten profilierten Lauffläche zusammenwirkt. Die erste und die zweite Lauffläche sind nicht zwingend identisch profiliert. Zur Erzeugung unterschiedlicher Rillungen sind verschiedene Paarungen von Laufflächen geeignet, um beispielsweise eine sogenannte Ein-Punkt-Rillung, Drei-Punkt-Rillung, Fünf-Punkt-Rillung, Punkt-Punkt-Rillung oder asymmetrische Rillung zu erzeugen. Eine besonders häufige Rillung ist eine Drei-Punkt-Rillung mittels eines Drei-Punkt-Rillkörpers. Durch eine Verschiebung der Laufflächen eines Rillkörpers in Querrichtung relativ zueinander ist auch eine sogenannte Offset-Rillung möglich. Die Verschiebung wird auch als Offset bezeichnet. Auch solche Offset-Rillungen sind mit dem hier beschriebenen Verfahren erkennbar und überprüfbar. Eine weitere Verschiebung ist regelmäßig auch senkrecht sowohl zur Querrichtung als auch zur Förderrichtung möglich. Damit wird ein Abstand zwischen den beiden Laufflächen eines Rillkörpers eingestellt, der sogenannte Rillkörperabstand. Dies erfolgt zweckmäßigerweise abhängig von einer Dicke der Bahn. Auch der Rillkörperabstand ist mit dem hier beschriebenen Verfahren erkennbar und überprüfbar.

Nachfolgend werden vorteilhafte Aspekte und bevorzugte Ausgestaltungen des Verfahrens im Detail beschrieben. Dabei wird zunächst eine Übersicht gegeben und daran anschließend genauer auf die folgenden Aspekte eingegangen: Messung, Vorverarbeitung, Positionserkennung, Validierung der Bearbeitungspositionen, Klassifizierung, Validierung des Ergebnisses der Klassifizierung.

Übersicht

Bei dem Verfahren wird - wie bereits beschrieben - zumindest ein Höhenprofil der Bahn im Rahmen einer Messung gemessen und anschließend ausgewertet, indem darin Anomalien (d.h. auffällige Ausschnitte des Höhenprofils) ermittelt werden. Für die Auswertung wird das Höhenprofil zweckmäßigerweise zunächst im Rahmen einer Vorverarbeitung, welche insbesondere Methoden der digitalen Signalverarbeitung verwendet, aufbereitet und dabei gegebenenfalls gefiltert.

Anschließend werden im Höhenprofil mittels einer Positionserkennung, welche insbesondere geeignete statistische Methoden anwendet, die Anomalien und somit auch die erkannten Bearbeitungspositionen, d.h. die tatsächlichen Bearbeitungspositionen, identifiziert. Die Positionserkennung erfolgt insbesondere im laufenden Betrieb der Anlage, um eine reibungslose Bearbeitung der Bahn zu gewährleisten. Anschließend erfolgt vorteilhafterweise noch eine Zuordnung der erkannten Bearbeitungspositionen zu den vorgegebenen Bearbeitungspositionen aus den Auftragsdaten.

Für eine weiterführende Analyse erfolgt bei dem hier beschriebenen Verfahren die bereits genannte Klassifizierung, mittels welcher hinsichtlich der durchgeführten Bearbeitungen (Schnitte und Rillungen), insbesondere auch hinsichtlich etwaiger Beschädigungen, Abweichungen, Produktionsfehler etc., das Höhenprofil abschnittsweise an den erkannten Bearbeitungspositionen klassifiziert wird, d.h. die Anomalien werden klassifiziert. Für die tatsächliche Klassifizierung, d.h. die Zuordnung einer Anomalie zu einem bestimmten Schnitt- oder Rilltyp (vorzugsweise auch zu einem Beschädigungstyp, Abweichungstyp, Produktionsfehlertyp etc.), sind verschiedene Ausgestaltungen geeignet, von welchen weiter unten einige beschrieben werden.

Zusätzlich erfolgt vorteilhafterweise auch eine Validierung. Die Validierung ist eine Validierung der Bearbeitungspositionen oder eine Validierung des Ergebnisses der Klassifizierung, vorzugsweise beides, sodass die Validierung dann zweiteilig ist, wovon nachfolgend auch ohne Beschränkung der Allgemeinheit ausgegangen wird. Bei der Validierung der Bearbeitungspositionen wird insbesondere ein Hinweis ausgegeben, die Anlage gestoppt oder eine andere geeignete Maßnahme eingeleitet, sobald festgestellt wird (z.B. bereits im Rahmen der Positionserkennung), dass die erkannten Bearbeitungspositionen innerhalb einer gegebenen Toleranz mit den vorgegebenen Bearbeitungspositionen aus den Auftragsdaten nicht übereinstimmen oder direkt als Beschädigungen, Abweichungen, Produktionsfehler oder dergleichen erkannt werden. Die Validierung des Ergebnisses der Klassifizierung anhand der Auftragsdaten erfolgt analog zur Validierung der Bearbeitungspositionen, d.h. es wird überprüft, ob der korrekte Schnitt- oder Rilltyp angewendet wurde und/oder korrekt ausgeführt wurde, insbesondere ob die Schnitte und Rillungen mit dem korrekten Schnitt- oder Rillkörper hergestellt wurden. Sobald im Rahmen dieser Validierung festgestellt wird, dass die erkannten Bearbeitungen innerhalb einer gegebenen Toleranz mit den vorgegebenen Schnitt- und/oder Rilltypen aus den Auftragsdaten nicht übereinstimmen, wird ein entsprechender Hinweis ausgegeben, die Anlage gestoppt oder eine andere geeignete Maßnahme eingeleitet. Insgesamt prüft und gewährleistet die Validierung in jeglicher Ausgestaltung somit eine bestimmte Qualität der Bearbeitungspositionen und der dort ausgeführten Bearbeitungen und leitet gegebenenfalls eine geeignete Reaktion hierauf ein.

Vorzugsweise ist das Verfahren durch mehrere Module realisiert, welche insbesondere voneinander funktional getrennt sind. Ein erstes Modul ist vorzugsweise ein Datenvorverarbeitungsmodul, welches die Vorverarbeitung durchführt und entsprechend das gemessene Höhenprofil als eine einheitliche Datenbasis für die nachfolgenden Module bereitstellt. Ein zweites Modul ist vorzugsweise ein Detektionsmodul, welches die Positionserkennung durchführt und entsprechend die Anomalien im Höhenprofil erkennt, dann zu erkannten (auch detektierten oder tatsächlichen) Bearbeitungspositionen verrechnet und diese schließlich ausgibt, vorzugsweise an ein drittes Modul, welches ein Zuordnungsmodul ist. Das Zuordnungsmodul führt die Zuordnung der Bearbeitungspositionen durch und ordnet entsprechend die erkannten Bearbeitungspositionen den vorgegebenen Bearbeitungspositionen gemäß den Auftragsdaten zu. Ein viertes Modul ist vorzugsweise ein Klassifizierungsmodul, welches die Klassifizierung durchführt und entsprechend den Anomalien jeweils einen Schnitt- oder Rilltyp zuordnet oder optional sogar einen Beschädigungstyp, Abweichungstyp, Produktionsfehlertyp oder dergleichen. Ein fünftes Modul ist vorzugsweise ein Validierungsmodul, welches die Validierung durchführt und entsprechend die erkannten Bearbeitungspositionen mit den vorgegebenen Bearbeitungspositionen vergleicht und/oder die erkannten Schnitt- und/oder Rilltypen mit den vorgegebenen Schnitt- und/oder Rilltypen vergleicht. Optional sind ein oder mehrere der Module mehrfach vorhanden, insbesondere um Schnitte und Rillungen getrennt voneinander auszuwerten, insbesondere zu klassifizieren und/oder zu validieren.

Die diversen Module sind geeigneterweise miteinander in einer Steuereinheit kombiniert (integrierte Ausgestaltung), alternativ sind ein oder mehrere Module separat in einer oder mehreren anderen Steuereinheiten untergebracht (verteilte Ausgestaltung). Eine oder mehrere der genannten Steuereinheiten und damit auch die darin gegebenenfalls enthaltenen Module sind vorteilhafterweise ein Teil der hier beschriebenen Anlage.

## Messung

Das Höhenprofil wird geeigneterweise mit einer Sensoreinheit (auch als Sensormodul bezeichnet) gemessen, mit einer Anzahl an Sensoren. Ein geeigneter Sensor ist insbesondere ein Abstandssensor wie weiter oben bereits genannt, z.B. ein Lasertriangulationssensor, welcher quer zur Bahn verschiebbar ist (z.B. mittels eines Linearmotors) und in Richtung der Bahn einen Abstand misst, d.h. die Entfernung zwischen Sensor und Bahn. Als Sensor ist auch eine Kamera geeignet, mit welcher insbesondere ein Bild der Bahn aufgenommen wird, aus welchem dann das Höhenprofil gewonnen wird. Der Sensor gibt für jede Messposition quer über die Bahn einen Messwert (Abstand) aus, welcher je nachdem, wie die Oberfläche der Bahn beschaffen ist, variiert. Im Ergebnis gibt der Sensor somit ein Höhenprofil aus, welches eine Reihe Messwerten enthält, insbesondere in Form eines Vektors. Jedem Messwert wird auch eine Position (Messposition) entlang der Bahn zugeordnet, welche z.B. aus dem Verfahrweg des Sensors ermittelt wird. Ein Paar aus einem Messwert und der zugehörigen Position ist ein Datenpunkt. Die Sensoreinheit ist vorzugsweise unmittelbar stromab der Schneid-/Rilleinheit angeordnet, d.h. der Bahnlauf von der Schneid-/Rilleinheit zur Sensoreinheit beträgt höchstens 10 m, vorzugsweise höchstens 1 m. Zweckmäßigerweise weist die Sensoreinheit eine Anpresswalze auf, um die Bahn beim Durchlaufen der Sensoreinheit und beim Messen des Höhenprofils gegen eine Auflage zu drücken und eine etwaige Wölbung der Bahn zumindest während der Messung soweit wie möglich zu unterdrücken.

Vorzugsweise weist die Sensoreinheit zwei Sensoren wie beschrieben auf, von welchen einer entlang einer Oberseite der Bahn ein oberes Höhenprofil misst und ein anderer analog entlang einer Unterseite der Bahn ein unteres Höhenprofil. Dadurch werden Detailinformationen, welche sich jeweils nur in einem der beiden Höhenprofile wiederfinden, vorteilhaft berücksichtigt. Beide Höhenprofile werden insbesondere gleichartig verarbeitet, sodass nachfolgend vereinfachend lediglich von einem Höhenprofil gesprochen wird. Grundsätzlich ist es ausreichend, lediglich ein Höhenprofil (d.h. auf der Oberseite oder auf der Unterseite) zu verwenden, die Verwendung beider Höhenprofile ist jedoch bevorzugt, speziell bei der Klassifizierung von Rillungen, da sich hierbei die Höhenprofile auf Oberseite und Unterseite regelmäßig unterscheiden und somit eine genauere Erkennung des Rilltyps und somit Klassifizierung ermöglichen. Außerdem lassen sich dann auch Schnitte und Rillungen deutlicher voneinander unterscheiden. Die Verarbeitungsschritte für beide Höhenprofile sind jedoch zweckmäßigerweise identisch.

Grundsätzlich können die mit der Messung gewonnenen Datenpunkte unmittelbar für die nachfolgenden Schritte und Module verwendet werden, vorteilhafterweise werden die Datenpunkte jedoch vorverarbeitet, d.h. das gemessene Höhenprofil wird vorverarbeitet und ist dann ein vorverarbeitetes Höhenprofil.

Vorverarbeitung (Pre-processing) mit dem Datenvorverarbeitungsmodul

Bei der Vorverarbeitung wird insbesondere für die nachfolgende Positionserkennung das gemessene Höhenprofil geeignet aufbereitet. Beispielsweise ist es möglich, dass bei der Messung des Höhenprofils eine Messbereichsüberschreitung stattfindet und kein Abstand gemessen werden kann, was regelmäßig bei einem Schnitt der Fall ist, da an dessen Bearbeitungsposition die Bahn durchbrochen ist. Entsprechend kann bei einer Messbereichsüberschreitung gegebenenfalls kein gültiger Messwert erzeugt werden, stattdessen wird als Messwert ein NaN (not a number) zurückgegeben und im Höhenprofil findet sich an der zugehörigen Messposition eine entsprechende Lücke. Bei der Vorverarbeitung werden nun speziell solche Lücken (NaNs) im Höhenprofil zweckmäßigerweise entfernt, um ein lückenloses Höhenprofil zu erhalten. Die Lücken werden dabei jedoch nicht einfach ausgelassen, sondern durch geeignete Werte ersetzt, z.B. mittels linearer Interpolation basierend auf den Messwerten benachbarter Messpositionen. Alternativ wird eine Lücke einfach durch einen zuvor definierten Wert ersetzt, z.B. mit einem Abtast-Halte-Glied durch den letzten gültigen Messwert. Alternativ wird für jede Lücke ein Wert von "0" eingesetzt (also ein verschwindender Abstand). In jedem Fall soll die Anzahl an Datenpunkten möglichst erhalten bleiben. Die genannten Möglichkeiten haben jedoch gegebenenfalls signifikante Auswirkungen im Frequenzbereich, sodass es zweckmäßig ist, das auf diese Weise aufbereitete Höhenprofil zusätzlich noch mit einem Anti-Aliasing-Filter zu filtern.

Weiter wird mit dem Datenvorverarbeitungsmodul zweckmäßigerweise das gemessene Höhenprofil auf die Breite der Bahn zugeschnitten, d.h. der Nullpunkt des Höhenprofils wird auf eine Seitenkante der Bahn verschoben. Alternativ oder zusätzlich wird das Höhenprofil noch auf die Breite der Bahn begrenzt, wodurch ein späterer Abgleich der erkannten Bearbeitungspositionen mit den vorgegebenen Bearbeitungspositionen erleichtert wird.

Zweckmäßigerweise wird das Höhenprofil mit dem Datenvorverarbeitungsmodul auf ein insbesondere äquidistantes Raster abgebildet. Dabei werden aus den Messwerten und Messpositionen neue Datenpunkte mit neuen (Mess-)Werten und Positionen erzeugt, welche entlang eines äquidistanten Rasters verteilt sind. Auf diese Weise wird festgelegt, welchen Abstand die Datenpunkte des Höhenprofils voneinander haben. Das Höhenprofil ist dann insbesondere ein Vektor, bei welchem jede einzelne Komponente einem Wert zu einer Position entlang des Höhenprofils entspricht. Gegebenenfalls werden demnach auf Basis der Messwerte weitere Datenpunkte abgeleitet (z.B. interpoliert), um ein bestimmtes Raster und insbesondere eine bestimmte Datenpunktdichte (z.B. Anzahl Datenpunkte pro Millimeter) zu erhalten. Die Datenpunktdichte ist insbesondere relevant für die Genauigkeit bei der Betrachtung und Verarbeitung des Höhenprofils im Frequenzraum. Untersuchungen haben ergeben, dass eine Datenpunktdichte von höchstens 10/mm noch ausreichend ist, dies entspricht bei einem äquidistanten Raster einem Abstand von 0,1 mm zwischen den einzelnen Positionen des Höhenprofils. Vorzugsweise ist die Datenpunktdichte vorgegeben und basierend darauf werden mit äquidistantem Abstand Stützstellen als neue Positionen definiert, an welchen dann auf Basis der Messwerte und Messpositionen jeweils ein neuer Wert für einen neuen Datenpunkt bestimmt wird, z.B. stimmen eine Messposition und eine Stützstelle überein, dann wird diese Messposition mit dem zugehörigen Messwert als Datenpunkt verwendet und andernfalls wird der Datenpunkt aus den nächsten Messwerten und Messpositionen interpoliert. Das resultierende Höhenprofil wird auch als bereinigtes Höhenprofil bezeichnet.

Geeigneterweise wird das Höheprofil noch kalibriert, um Abweichungen der Parallelität der beiden Sensoren aufgrund von Fertigungstoleranzen oder durch Temperaturschwankungen herauszurechnen. Hierzu wird beispielsweise mit einer Kalibriermessung ein Kalibriervektor ermittelt und dann vom Höhenprofil subtrahiert. Die konkrete Ausgestaltung einer solchen Kalibrierung ist vorliegend jedoch von untergeordneter Bedeutung und wird daher nicht näher beschrieben.

Das aufbereitete, zugeschnittene, bereinigte und/oder kalibrierte Höhenprofil wird dann für die nachfolgenden Schritte und Module als vorverarbeitetes Höhenprofil ausgegeben.

*Filter*

Das Detektionsmodul soll in dem aufbereiteten Höhenprofil etwaige Anomalien (zusammenhängende Teilmengen von Datenpunkten) identifizieren und dadurch die tatsächlichen Bearbeitungspositionen (zusammenhängende Teilmengen von Positionen) erkennen. Zunächst wird angenommen, dass das Höhenprofil bei einer Bahn ohne Schnitte und Rillungen, d.h. im Normalzustand der Bahn, zumindest in guter Näherung als eine konstante Funktion beschreibbar ist, sodass eine Anomalie dann zweckmäßigerweise ausgehend hiervon als jede Abweichung des Höhenprofils von dieser konstanten Funktion definiert wird. Vorliegend wurde erkannt, dass die Anomalien auch im Frequenzraum erkennbar sind, speziell im Spektrogramm des Höhenprofils. Das Spektrogramm ist eine zweidimensionale Spektraldarstellung und enthält die frequenzabhängige Amplitude des Höhenprofils als Funktion der Position des jeweiligen Datenpunkts (insbesondere entlang des Rasters). Das Spektrogramm wird aus dem Höhenprofil beispielsweise mittels einer Kurzzeit-Fourier-Transformation (STFT) erzeugt, wobei die Zeitdimension durch die Position (d.h. eine räumliche Dimension) ersetzt wird, sodass die Frequenzen dann inverse Positionen/ sind. Der erzielbare Frequenzbereich ist abhängig von der oben beschriebenen Datenpunktdichte (Nyquist-Shannon-Abtasttheorem). Mit zehn Datenpunkten pro Millimeter ist ein Frequenzbereich von 0 bis 5 mm$^{-1}$ darstellbar.

Untersuchungen haben ergeben, dass im Spektrogramm an den exakt gleichen Positionen wie tatsächlich ausgeführte Schnitte durchgehende Linien (parallel zur Frequenzachse) auftreten. Dies bedeutet, dass ein Schnitt über das ganze Frequenzspektrum hinweg identifizierbar ist und dass durch Herausfiltern eines geeigneten Teilbereichs aus dem Frequenzspektrum (d.h. durch Selektion eines bestimmten Frequenzbereichs), in welchem lediglich die Frequenzen eines Schnitts enthalten sind, der Einfluss dieses Schnittes auf das gemessene Höhenprofil isoliert darstellbar ist und damit eine verbesserte Identifizierung des Schnitts ermöglicht. Entsprechend wird in einer vorteilhaften Ausgestaltung zur besseren Identifizierung speziell von Schnitten ein entsprechender Frequenzbereich mithilfe eines Bandpassfilters freigestellt. Der Bandpassfilter weist dann einen Durchlassbereich auf, welcher dem Frequenzbereich entspricht. Ein geeigneter Frequenzbereich reicht beispielsweise von 1,5 mm$^{-1}$ bis insbesondere 5 mm$^{-1}$, da in einem solchen Frequenzbereich lediglich die Auswirkung der Schnitte im Spektrogramm sichtbar sind und alle übrigen Einflüsse auf das Höhenprofil vollständig oder wenigstens überwiegend unterhalb dieses Frequenzbereichs liegen. Entsprechend kommt es auf die Obergrenze nicht zwingend an, diese ist vielmehr insbesondere durch die Datenpunktdichte vorgegeben. Analog sind auch an den Bearbeitungspositionen von Rillungen im Spektrogramm Auffälligkeiten im Frequenzbereich von 0 mm$^{-1}$ bis etwa 0,1 mm$^{-1}$ erkennbar, sodass entsprechend in einer vorteilhaften Ausgestaltung speziell zur besseren Identifizierung von Rillungen ein entsprechender Frequenzbereich mithilfe eines Bandpassfilters freigestellt wird. Ein geeigneter Frequenzbereich (d.h. Durchlassbereich des Bandpassfilters) reicht beispielsweise von einer Frequenz > 0 mm$^{-1}$ (z.B. 0,001 mm$^{-1}$), zur Unterdrückung des Gleichanteils im Höhenprofil bei 0 mm$^{-1}$, bis 0,1 mm$^{-1}$. Zweckmäßig ist auch die Kombination beider der genannten Bandpassfilter. Je nach Anwendungsfall können auch andere als die oben genannten Frequenzbereich vorteilhaft sein.

Allgemein wird demnach zur besseren Identifizierung einer oder mehrerer Anomalien vorteilhafterweise mithilfe eines Bandpassfilters ein Frequenzbereich freigestellt, welcher die Anomalien enthält. In einer geeigneten Ausgestaltung wird dementsprechend das Höhenprofil, bevor darin die Anomalien identifiziert werden, mit einem Bandpassfilter gefiltert wird, wobei der Bandpassfilter einen

Frequenzbereich freistellt, welcher derart gewählt ist, dass gezielt solche Anteile des Höhenprofils erhalten bleiben, welche entweder durch Schnitte oder durch Rillungen erzeugt werden. Der freigestellte Frequenzbereich (d.h. Durchlassbereich) wird durch eine entsprechend gewählte Bandbreite des Bandpassfilters mit geeigneten Grenzfrequenzen realisiert. Der freigestellte Frequenzbereich wird je nach Anwendungsfall geeignet ausgewählt, gegebenenfalls auch anders als oben beschrieben, und stellt insofern auch einen einstellbaren Parameter des Detektionsmoduls dar, durch dessen Anpassung die Identifizierung von Anomalien optimierbar ist.

In einer vorteilhaften Ausgestaltung wird die Vorverarbeitung durch einen oder mehrere zusätzliche Sensoren zur Schwingungsmessung an der Bahn weiter verbessert. Ein entsprechender Sensor misst eine Schwingung der Bahn bei deren Bewegung durch die Anlage. Weiter wird eine Schwingungsfrequenz der Schwingung bestimmt und diese Schwingungsfrequenz dann zweckmäßigerweise gezielt aus dem Höhenprofil herausgefiltert, z.B. mittels eines entsprechenden Frequenzfilters oder indem der Durchlassbereich des erwähnten Bandpassfilters derart gewählt wird, dass die Schwingungsfrequenz von diesem unterdrückt wird.

Das oben beschriebene Filtern mit einem oder mehreren Bandpassfiltern erfolgt optional innerhalb des Detektionsmoduls und dann als Teil der Positionserkennung.

Positionserkennung mit dem Detektionsmodul

Der (erste) Schwellwert wird geeigneterweise mithilfe einer statistischen Methode bestimmt und ist in einer bevorzugten Ausgestaltung eine Standardabweichung des Höhenprofils, z.B. 2σ. Der Schwellwert hängt insbesondere von der Position ab und bildet gleichsam eine Hüllkurve um das Höhenprofil. Durchbricht das Höhenprofil diese Hüllkurve, erreicht also den Schwellwert, dann liegt an dieser Position eine Anomalie vor, welche auch als solche identifiziert wird. Durch Multiplikation der Standardabweichung mit einem Faktor ist der Schwellwert je nach Bedarf skalierbar und dieser Faktor stellt insofern einen Parameter zur Optimierung dar. Der Schwellwert und speziell dessen Bestimmung profitieren besonders von der oben beschriebenen Filterung des Höhenprofils mittels eines Bandpassfilters, da dadurch das Höhenprofil auf die jeweils gesuchte Anomalie (Schnitt oder Rillung) begrenzt wird und deren Identifizierung mittels statistischer Methoden erleichtert wird. Die Positionen der identifizierten Anomalien des Höhenprofils werden als Kandidaten für erkannte Bearbeitungsposition betrachtet, insbesondere um nachfolgend mit dem Zuordnungsmodul einer vorgegebenen Bearbeitungsposition zugeordnet zu werden.

Zur Erkennung von Schnitten werden zweckmäßigerweise in beiden Höhenprofile (oberes und unteres Höhenprofil) getrennt Anomalien identifiziert und eine Anomalie wird an einer (tatsächlichen) Bearbeitungsposition dann als ein Schnitt erkannt, wenn an dieser Bearbeitungsposition sowohl im oberen als auch im unteren Höhenprofil eine Anomalie identifiziert wurde. Zweckmäßigerweise wird alternativ oder zusätzlich eine Anomalie an einer (tatsächlichen) Bearbeitungsposition als ein Schnitt erkannt, wenn im oberen oder im unteren Höhenprofil an dieser Bearbeitungsposition eine Lücke (NaN) vorliegt. Dies umfasst auch den Fall, dass in beiden Höhenprofilen zugleich eine Lücke vorliegt. Geeigneterweise werden diese drei Kriterien miteinander verkettet (verrechnet), sodass das Vorliegen eines der Kriterien ausreichend ist, um einen Schnitt zu erkennen.

Zur Erkennung von Anomalien, speziell insbesondere Rillungen, wird zweckmäßigerweise aus dem unteren und dem oberen Höhenprofil ein Differenzhöhenprofil errechnet, z.B. durch Subtraktion voneinander. Mit anderen Worten, das Höhenprofil, in welchem eine Anzahl von Anomalien identifiziert wird, indem solche Ausschnitte des Höhenprofils jeweils als eine Anomalie identifiziert werden, in welchen das Höhenprofil einen vorgegebenen Schwellwert erreicht, ist ein Differenzhöhenprofil. Dabei wird angenommen, dass eine Anomalie, speziell eine Rillung, die Stärke der Bahn an einer (tatsächlichen) Bearbeitungsposition verringert. Das Differenzhöhenprofil wird anschließend zweckmäßigerweise wie weiter oben bei der Vorverarbeitung beschrieben mit einem Bandpassfilter gefiltert und ist dadurch besonders robust gegenüber Störungen bei der Messung. Erreicht das Differenzhöhenprofil an einer Bearbeitungsposition den (ersten) Schwellwert, so wird an dieser Bearbeitungsposition eine Anomalie, speziell insbesondere eine Rillung erkannt.

Mittels der beiden vorgenannten Schritte zur Erkennung von Schnitten einerseits und zur Erkennung von Rillungen andererseits werden die identifizierten Anomalien noch vor der Klassifizierung geeigneterweise auf zwei Gruppen aufgeteilt, nämlich auf eine erste Gruppe, welche alle Anomalien enthält, welche grundsätzlich als Schnitte erkannt wurden, und eine zweite Gruppe, welche analog alle Anomalien enthält, welche als Rillungen erkannt wurden. Die Anomalien werden demnach sozusagen vorsortiert. Diese zwei Gruppen von Anomalien werden dann getrennt weiterverarbeitet, d.h. klassifiziert und/oder validiert. Dabei kann grundsätzlich für beide Gruppen gemeinsam dasselbe Klassifizierungsmodul verwendet werden oder es wird für jede Gruppe ein eigenes, spezialisiertes Klassifizierungsmodul verwendet.

## Zuordnung der Bearbeitungspositionen mit dem Zuordnungsmodul

Wie bereits weiter oben erwähnt wurde, ist jeder Anomalie eine tatsächliche Bearbeitungsposition zugeordnet, welche automatisch durch die Identifizierung der Anomalie erkannt wird und dann auch als erkannte Bearbeitungsposition bezeichnet wird. Im Rahmen der Zuordnung der Bearbeitungspositionen werden die tatsächlichen Bearbeitungspositionen den vorgegebenen Bearbeitungspositionen zugeordnet und diese hierzu zweckmäßigerweise gegenübergestellt. In einer geeigneten Ausgestaltung wird hierfür vom Zuordnungsmodul eine Korrelationstabelle erzeugt, welche die Ähnlichkeit jeder tatsächlichen Bearbeitungsposition zu jeder vorgegebenen Bearbeitungsposition enthält. Beispielsweise ist die Korrelationstabelle eine einfache Abstandstabelle, welche die Abstände jeder tatsächlichen Bearbeitungsposition zu jeder vorgegebenen Bearbeitungsposition enthält. Einer jeweiligen tatsächlichen Bearbeitungsposition wird dann diejenige vorgegebene Bearbeitungsposition zugeordnet, welche der tatsächlichen Bearbeitungsposition am ähnlichsten ist, d.h. zu dieser die größte Ähnlichkeit aufweist, z.B. zu dieser den geringsten Abstand aufweist. Vorteilhafterweise wird dabei auch eine Doppelzuordnung vermieden, d.h. eine Zuordnung mehrerer tatsächlichen Bearbeitungspositionen zu lediglich einer vorgegebenen Bearbeitungsposition oder umgekehrt, sondern jeder tatsächlichen Bearbeitungsposition wird höchstens eine vorgegebene Bearbeitungsposition zugeordnet und umgekehrt ebenso.

Mittels der beschriebenen Gegenüberstellung werden vorteilhafterweise auch etwaige überschüssige Bearbeitungspositionen erkannt, d.h. solche Bearbeitungspositionen, welche zwar erkannt wurden, jedoch keiner vorgegebenen Bearbeitungsposition in den Auftragsdaten zugeordnet werden können. Dies ist insbesondere der Fall, wenn die Anzahl der vorgegebenen Bearbeitungspositionen geringer ist als die Anzahl der erkannten Bearbeitungsposition. Umgekehrt werden analog zweckmäßigerweise fehlende vorgegebene Bearbeitungspositionen erkannt, falls die Anzahl der vorgegebenen Bearbeitungspositionen größer ist als die Anzahl der erkannten Bearbeitungsposition. Auf diese Weise werden dann dadurch, dass nicht alle erkannten/vorgegebenen Bearbeitungspositionen zugeordnet werden können entsprechend überschüssige oder fehlende Bearbeitungspositionen erkannt.

Vorteilhaft ist auch eine Ausgestaltung, bei welcher ein Grenzwert für die Ähnlichkeit festgelegt ist, welcher mindestens erreicht werden muss, um eine Zuordnung durchzuführen. Wird der Abstand als Maß für die Ähnlichkeit verwendet, ist der Grenzwert entsprechend ein Höchstabstand (z.B. 5 mm). Auf diese Weise wird eine erzwungene Zuordnung vermieden und die Erkennung von überschüssigen und fehlenden Bearbeitungspositionen verbessert.

In einer zweckmäßigen Ausgestaltung wird bei der Validierung eine Anomalie als eine erwartete Anomalie gekennzeichnet, falls eine erkannte Bearbeitungsposition einer vorgegebenen Bearbeitungsposition zugeordnet werden konnte, und andernfalls wird die Anomalie als eine unerwartete Anomalie gekennzeichnet. Speziell in letzterem Fall wird geeigneterweise ein Hinweis ausgegeben, dass unerwartete Bearbeitungen, Beschädigungen, Schnitte und/oder Rillungen erkannt wurden. Umgekehrt wird bei der Validierung zweckmäßigerweise eine vorgegebene Bearbeitungsposition als gefundene Bearbeitungsposition gekennzeichnet, falls eine vorgegebene Bearbeitungsposition einer erkannten Bearbeitungsposition zugeordnet werden konnte, und andernfalls wird die Bearbeitungsposition als nicht gefunden gekennzeichnet. Bei der Validierung wird dies zweckmäßigerweise analog auf den Schnitt- oder Rilltyp angewandt, sodass dann ein vorgegebener Schnitt- oder Rilltyp als nicht gefunden gekennzeichnet wird, falls dieser mittels der Klassifizierung nicht gefunden wurde.

### Klassifizierung (Charakterisierung) mit dem Klassifizierungsmodul

Die erkannten Bearbeitungspositionen, welche optional wie beschrieben auch vorgegebenen Bearbeitungspositionen zugeordnet und dabei vorzugsweise auch validiert wurden, werden nun mit dem Klassifizierungsmodul klassifiziert und dadurch jeweils einem von mehreren Schnitttypen oder Rilltypen zugeordnet. Bei der Klassifizierung wird - grob gesagt - eine jeweilige Anomalie insbesondere hinsichtlich Form und/oder Ausprägung bewertet und basierend darauf einem Schnitt- oder Rilltyp zugeordnet. Die Klassifizierung ist ein wichtiger Bestandteil zur Qualitätssicherung der fertig verarbeiteten Bahn (z.B. Nutzen oder Bögen aus Wellpappe) und ermöglicht insbesondere auch eine vorteilhafte Rückverfolgung eines Auftrags. Beispielsweise werden im Falle einer Reklamation die vorgegebenen Schnitt- und/oder Rilltypen aus den Auftragsdaten mit den klassifizierten Anomalien abgeglichen und dadurch ein möglicher Grund für die Reklamation identifiziert. Das Gleiche gilt analog für die erkannten und vorgegebenen Bearbeitungspositionen. Durch die hier beschriebene Klassifizierung ist entsprechend vorteilhaft das tatsächliche Ergebnis der Produktion mit den Auftragsdaten abgleichbar und überprüfbar, d.h. validierbar.

Da typischerweise mehrere verschiedene Schneidkörper und/oder Rillkörper verwendet werden, werden entsprechend unterschiedliche Schnitte und/oder Rillungen und damit auch unterschiedliche Anomalien in der Bahn erzeugt. Dabei weist jeder Schneidkörper und jeder Rillkörper eine eigene Charakteristik auf, welche zu einer entsprechenden Charakteristik (Form und/oder Ausprägung) der damit erzeugten Anomalie führt. Insbesondere diese Charakteristik ist Gegenstand der hier beschriebenen Klassifizierung. Dabei weist ein Schnitt im Vergleich zu einer Rillung regelmäßig eine deutlich einfachere Charakteristik auf. Da ein Schnitt im Wesentlichen eine Trennung der Bahn an einer bestimmten Bearbeitungsposition ist, ist es zunächst ausreichend, lediglich eine solche Trennung (z.B. mittels Lücken in den Messwerten) zu suchen. Eine Validierung mit den Auftragsdaten ist für Schnitte damit grundsätzlich auch ohne eine Klassifizierung möglich. Auch ist es vorteilhaft möglich, ohne die Klassifizierung Schnitte von Rillungen zu unterscheiden. Entsprechend werden in einer vorteilhaften Ausgestaltung zunächst Schnitte von Rillungen wie beschrieben unterschieden, z.B. anhand von Lücken im Höhenprofil, und anschließend werden lediglich diejenigen Anomalien klassifiziert, an deren Bearbeitungspositionen Rillungen erkannt wurden.

Nachfolgend wird vorrangig auf die Klassifizierung von Rillungen eingegangen. Für Schnitte gelten die Ausführungen jedoch analog, denn grundsätzlich ist es auch für Schnitte vorteilhaft, die gesamte Charakteristik einer jeweiligen Anomalie zu betrachten, um daraus Schlussfolgerungen zu ziehen, z.B. ob ein spezieller Schnitt auch korrekt ausgeführt wurde oder um zu prüfen, ob der verwendete Schneidkörper noch ordnungsgemäß funktioniert oder ausgetauscht werden muss.

Zusätzlich zu den Schnitt- und Rilltypen ist es auch vorteilhaft, andere Typen festzulegen, welche bei der Klassifizierung erkannt werden. Besonders vorteilhaft ist es, einen Nulltyp festzulegen, welcher einen Abschnitt der Bahn sowohl ohne Schnitt als auch ohne Rillung beschreibt. Mit diesem Nulltyp wird dann besonders einfach erkannt, wenn an einer vorgegebenen Bearbeitungsposition keine Bearbeitung erfolgt ist, dort also jegliche Rillung oder Schnitt fehlen. Insbesondere bei der Validierung der Bearbeitungspositionen wird dann in dem Höhenprofil dort, wo gemäß den Auftragsdaten eine Bearbeitung vorgegeben ist, aber keine Anomalie erkannt wurde, ermittelt, ob an dieser Position der Nulltyp vorliegt. Alternativ oder zusätzlich werden die Anomalien an etwaigen überschüssigen Bearbeitungspositionen durch Vergleich mit anderen Typen klassifiziert und dann z.B. als Beschädigungen erkannt. Die Festlegung anderer Typen für die Klassifizierung, speziell des Nulltyps, erfolgt insbesondere analog zu den weiter unten beschriebenen Möglichkeiten der Festlegung von Schnitt- und Rilltypen, d.h. beispielsweise mittels Modellierung, Messung oder Lernmaschine.

In einer geeigneten Ausgestaltung wird eine jeweilige Anomalie für die Klassifizierung mit einem Repräsentanten eines jeweiligen Schnitt- oder Rilltyps verglichen und dabei die Ähnlichkeit (d.h. Übereinstimmung) der Anomalie und des Schnitt- oder Rilltyps mittels einer Abstandsnorm berechnet. Der jeweilige Repräsentant ist analog zur Anomalie eine Reihe von Datenpunkten, insbesondere ein Vektor mit gleicher Länge wie die Anomalie, und gibt eine typische oder ideale Form des entsprechenden Schnitt- oder Rilltyps wieder. Mit anderen Worten: der Repräsentant ist analog zur Anomalie eine Menge von Datenpunkten (Werte als Funktion der Position). Dabei wird aus den Datenpunkten der Anomalie und des Repräsentanten an einer jeweiligen Position (d.h. bei einem Vektor komponentenweise) eine Differenz gebildet und diese Differenzen werden dann aufsummiert. Beispielsweise wird die Differenz berechnet gemäß $\vec{d} = \vec{a} - \vec{v}$ und damit dann die Ähnlichkeit gemäß

$$\|\vec{d}\|_2 = \sqrt{\sum_{n=-N}^{N}(d_n)^2},$$

wobei $\vec{a}$ und $\vec{v}$ die Anomalie beziehungsweise der Repräsentant sind und jeweils 2·N+1 Datenpunkte (genauer: Werte) aufweisen.

In einer ebenfalls geeigneten Ausgestaltung ist der Repräsentant nicht wie beschrieben lediglich ein eindimensionaler Vektor, sondern weist neben der Position noch eine oder mehrere weitere Dimensionen auf, insbesondere den Rillkörperabstand. Ein solcher Repräsentant ist dann im Grunde eine Menge mehrerer eindimensionaler Repräsentanten, welche durch einen oder mehrere Parameter wie z.B. den Rillkörperabstand parametrisiert ist. Für den Vergleich mit der Anomalie gelten die Ausführungen zum eindimensionalen Repräsentanten analog.

Die Existenz von Repräsentanten ist vorrangig für die nachfolgend beschriebenen Klassifizierungen mittels Modellierung und basierend auf Messwerten von Bedeutung. Für die Klassifizierung mittels Lernmaschine fließen entsprechende Informationen durch ein Training der Lernmaschine ein, welches grundsätzlich auch anhand von Repräsentanten wie beschrieben erfolgen kann.

*Klassifizierung mit Modellierung*

Bei einer ersten Ausgestaltung zur Klassifizierung werden die Repräsentanten mittels eines physikalischen Modells bestimmt, welches die Erzeugung von Rillungen (und/oder Schnitten) basierend auf einer Geometrie eines jeweiligen Rillkörpers (beziehungsweise Schneidkörpers) der Schneid-/Rilleinheit simuliert. Zunächst wird für jeden Rilltyp auf Basis des zugehörigen Rillkörpers ein Referenzmodell erstellt, welches alle relevanten Eigenschaften der entsprechenden Rillung enthält. Das Referenzmodell dient dann als Repräsentant für die Klassifizierung mittels des Klassifizierungsmoduls. Eine jeweilige Anomalie wird dann mit verschiedenen Repräsentanten verglichen und als derjenige Rilltyp klassifiziert, dessen Repräsentant der Anomalie am ähnlichsten ist. In einer geeigneten Ausgestaltung wird der Repräsentant aus Konstruktionsdaten des Rillkörpers erzeugt, z.B. indem direkt dessen Kontur in Querrichtung als Repräsentant verwendet wird. Da der Rillkörper seine Kontur jedoch typischerweise nicht identisch, sondern nur näherungsweise auf die Bahn überträgt, ist es zweckmäßig, eine entsprechende Übertragungsfunktion bei der Festlegung des Repräsentanten zu berücksichtigen oder den Repräsentanten ausgehend von den Konstruktionsdaten oder der Kontur des Rillkörpers mittels einer Finite-Elemente-Methode zu bestimmen, welche dann zusätzliche Parameter bezüglich des Prozesses der Erzeugung einer Rillung mit dem Rillkörper berücksichtigt.

Die Modellierung, d.h. die Erzeugung von Repräsentanten, erfolgt in einer vorteilhaften Ausgestaltung mit einer Lernmaschine. Dies wird weiter unten noch genauer beschrieben.

*Klassifizierung basierend auf Messwerten*

Bei einer zweiten Ausgestaltung zur Klassifizierung wird der Repräsentant eines jeweiligen Rilltyps (oder Schnitttyps) anhand vorheriger Messwerte bestimmt, geeigneterweise indem zu einem jeweiligen Rilltyp (oder Schnitttyp) eine Vielzahl an Höhenprofilen aufgenommen und aus diesen dann der Repräsentant für diesen Rilltyp (beziehungsweise Schnitttyp) bestimmt wird, insbesondere mittels statistischer Methoden. Dies hat den Vorteil, dass der Repräsentant sich eher am tatsächlichen Ergebnis der Bearbeitung orientiert und weniger am Rillkörper, wie zuvor beschrieben, wodurch die Ähnlichkeit potentiell größer und das Ergebnis somit vertrauenswürdiger ist. Zusätzlich zum Rilltyp und der Kontur des Rillkörpers werden dann insbesondere die Parameter Rillkörperabstand und/oder Dicke der Bahn berücksichtigt, welche grundsätzlich bekannt sind und beispielsweise ein Teil der Auftragsdaten sind. Dadurch unterliegen diese Parameter auch keiner Unschärfe. In einer geeigneten Ausgestaltung wird der Repräsentant einfach als Mittelwert der Höhenprofile bestimmt, d.h. Mittelwert als Funktion der Position entlang des Höhenprofils. Zweckmäßigerweise werden zuvor noch etwaige Ausreißer eliminiert, z.B. indem solche Höhenprofile, welche um einen bestimmten (zweiten) Schwellwert, z.B. 2σ, vom Mittelwert abweichen, ignoriert werden und dann erneut der Mittelwert der verbleibenden Höhenprofile gebildet wird und als Repräsentant verwendet wird.

In einer geeigneten Weiterbildung werden die Messwerte unterschiedlicher Positionen bei der Berechnung der Ähnlichkeit unterschiedlich stark gewichtet, z.B. mit einem Gewichtungsvektor $\vec{g}$, welcher für jede Position ein Gewicht enthält. Der Gewichtungsvektor wird insbesondere elementweise mit dem Differenzvektor multipliziert, bevor dann die Abstandsnorm gebildet wird. Zweckmäßigerweise werden solche Positionen stärker gewichtet, welche eine geringere Streuung aufweisen. Die Streuung als Funktion der Position wird anhand der gemessenen Höhenprofile ermittelt. Die Streuung ist beispielsweise einfach eine Breite einer Einhüllenden an einer jeweiligen Position aller Höhenprofile oder die Varianz (d.h. die statistische Größe "Varianz"). In einer besonders vorteilhaften Ausgestaltung wird der Gewichtsvektor mittels einer Exponentialfunktion als $\vec{g} = e^{-\vec{b}}$ bestimmt, wobei $\vec{b}$ die Breite der Einhüllenden an den verschiedenen Positionen angibt.

Die Klassifizierung basierend auf Messwerten ermöglicht außerdem eine stetige Weiterentwicklung der Repräsentanten in Sinne eines Trainings. In einer geeigneten Ausgestaltung werden hierbei die Anomalien jeweils als eine Vorlage gespeichert und diese gekennzeichnet, indem zu einer jeweiligen Vorlage gespeichert wird, zu welchem Schnitt- und/oder Rilltyp diese Vorlage gehört. Auf diese Weise werden bekannte Zuordnungen von Anomalien zu Schnitt- und/oder Rilltyp erstellt, welche insbesondere als Repräsentanten, zur Erstellung von Repräsentanten oder als Trainingsdaten für ein Training einer Lernmaschine geeignet sind (siehe weiter unten). Die Kennzeichnung erfolgt z.B. per Nutzereingabe. Die gekennzeichneten Vorlagen enthalten demnach korrekte Zuordnungen von Anomalien zu Schnitt- und/oder Rilltypen und werden dann vorteilhaft wie oben beschrieben zur fortlaufenden Aktualisierung eines jeweiligen Repräsentanten verwendet.

*Klassifizierung mit einer Lernmaschine*

Bei einer dritten Ausgestaltung zur Klassifizierung wird eine Lernmaschine verwendet, welche eine Anomalie (d.h. zumindest eine oder genau eine Anomalie) als Eingangsparameter erhält und als Ausgangsparameter dann den zugehörigen Schnitt- oder Rilltyp ausgibt. Die Lernmaschine ist dann ein Teil des Klassifizierungsmoduls. Die Lernmaschine ist vorzugsweise ein neuronales Netz, mit einer Vielzahl von Neuronen, wovon nachfolgend auch ohne Beschränkung der Allgemeinheit ausgegangen wird. Bei der zuvor beschriebenen Klassifizierung mit Modellierung oder basierend auf Messwerten erfolgt ein Vergleich der Anomalie im Kern über eine Differenzrechnung und mehrere Repräsentanten. Mittels dieses Vergleichs wird die Anomalie einem entsprechenden Schnitt- oder Rilltyp zugeordnet. Bei der Klassifizierung mit einer Lernmaschine wird im Ergebnis ebenfalls die Anomalie einem entsprechenden Schnitt- oder Rilltyp zugeordnet, es erfolgt aber kein unmittelbarer Vergleich mit Repräsentanten, die entsprechende Information ist vielmehr in der Lernmaschine kodiert. Hierfür ist die Lernmaschine zweckmäßigerweise entsprechend trainiert, speziell mittels eines überwachten Trainings (supervised learning), d.h. die Lernmaschine ist mit bekannten Zuordnungen von Anomalien zu Schnitt- und/oder Rilltyp trainiert. Für das Training sind auch die bereits genannten Repräsentanten grundsätzlich geeignet.

Als Eingangsparameter für die Lernmaschine wird eine jeweilige Anomalie verwendet. Die Eingangsparameter bilden einen Eingangsvektor, vorzugsweise wird die Anomalie als Vektor dargestellt (welcher dann insbesondere nur die Werte, nicht aber die Positionen der Datenpunkte der Anomalie enthält) und direkt als Eingangsvektor verwendet. Bei der Klassifizierung mittels Lernmaschine ist es vorteilhaft, als Eingangsparameter beide Höhenprofile gleichzeitig zu verwenden, d.h. nicht nur eine Anomalie im Höhenprofil auf einer Seite der Bahn an die Lernmaschine zu übergeben, sondern zusätzlich hierzu auch den zugehörigen Ausschnitt des Höhenprofils (d.h. an denselben Bearbeitungspositionen) der anderen Seite der Bahn, d.h. die gegenüberliegende Anomalie. Zwei solche gegenüberliegenden Anomalien bilden ein Anomalienpaar. Dadurch verdoppeln sich entsprechend die Menge der Eingangsparameter und die Länge des Eingangsvektors. Dies ist speziell zur Klassifizierung von Rillungen vorteilhaft.

Die Schnitt- und/oder Rilltypen werden im Zusammenhang mit der Lernmaschine auch als Zielklassen bezeichnet. Die Zielklassen werden der Lernmaschine in einer geeigneten Ausgestaltung durch eine One-Hot Kodierung zugänglich gemacht (oder äquivalent One-Cold). Darunter wird insbesondere verstanden, dass die typischerweise mit einer Zeichenkette benannten Schnitt- und/oder Rilltypen (z.B. "Drei-Punkt-Rillung", "Ein-Punkt-Rillung" und "Punkt-Punkt-Rillung", "keine Rillung (d.h. Nulltyp)") nun jeweils mit einem Vektor bezeichnet werden, welcher je nach Schnitt- und/oder Rilltyp an einer einzelnen Stelle ein High-Bit aufweist und ansonsten nur Low-Bits. Die Anzahl an Bits, d.h. die Länge des Vektors, entspricht der Anzahl an Schnitt- und/oder Rilltypen. Optional existieren zusätzlich noch der bereits genannte Nulltyp und/oder andere Typen. Die Ausgangsparameter des neuronalen Netzes bilden insbesondere einen Ausgangsvektor mit derselben Länge.

Als Aktivierungsfunktion für die einzelnen Neuronen des neuronalen Netzes wird vorzugsweise die sogenannte ReLu-Funktion verwendet (ReLu = rectified linear unit function), welche definiert ist als relu(y) := max(y, 0). Da diese ReLu-Funktion über einen bestimmten Wertebereich lediglich einen Nullwert zurückgibt, werden einzelne Neuronen, welche für die Erkennung eines anderen Schnitt- oder Rilltyps in dem Eingangsvektor zuständig sind, effektiv abgeschaltet. Das Ergebnis der Klassifikation ist somit schärfer. Zudem ist die ReLu-Funktion vorteilhaft differenzierbar (mit Ausnahme des Koordinatenursprunges).

Das neuronale Netz weist allgemein einen input layer (Eingabeschicht) auf, zur Entgegennahme des Eingangsvektors und einen output layer (Ausgabeschicht), zur Ausgabe des Ausgangsvektors. Der input layer und der output layer sind über eine Anzahl von hidden layers (versteckte Schichten) verbunden. In einer geeigneten Ausgestaltung weist das neuronale Netz mehrere, vorzugsweise drei, hidden layers auf, mit in Richtung des output layer abnehmender Anzahl an Neuronen, vorzugsweise 300 im ersten, 200 im zweiten und 100 Neuronen im dritten hidden layer. Eine solche Ausgestaltung der hidden layers hat sich als besonders vorteilhaft erwiesen. Zum Training des neuronalen Netzes wird beispielsweise ein Gradientenabstiegsverfahren (gradient descent) gewählt, als Kostenfunktion hierfür wird insbesondere ein statistisches Maß verwendet, vorzugsweise die Kreuzentropie.

In einer ersten vorteilhaften Ausgestaltung wird die Lernmaschine mit korrekt identifizierten Anomalien trainiert (z.B. basierend auf den weiter oben bereites genannten Vorlagen und/oder Repräsentanten) und ist dann entsprechend eine mit überwachtem Training trainierte Lernmaschine. Die Länge des Ausgangsvektors entspricht insbesondere der Anzahl an Schnitt- und/oder Rilltypen plus gegebenenfalls zusätzlicher anderer Typen, sodass der Ausgangsvektor dann angibt, wie ähnlich die als Eingangsvektor übergebene Anomalie (oder Anomalienpaar, bei gleichzeitiger Eingabe beider Seiten) zu einem jeweiligen Schnitt- und/oder Rilltyp oder anderem Typ ist.

In einer zweiten vorteilhaften Ausgestaltung wird mit der Lernmaschine der bereits genannte, jeweilige Repräsentant eines Rilltyps (oder Schnitttyps) berechnet, welcher dann wie weiter oben beschrieben zur Klassifizierung verwendet wird, indem eine jeweilige Anomalie mit dem Repräsentanten verglichen wird. Der Repräsentant wird auch als Vergleichssignal bezeichnet. Die Lernmaschine erzeugt demnach für jeden Schnitt- und/oder Rilltyp einen Repräsentanten und wird insofern zur Modellierung verwendet. Zweckmäßigerweise ist die Lernmaschine vorab entsprechend trainiert worden. In einer geeigneten Ausgestaltung wird die bereits beschriebene Lernmaschine im Grunde invers verwendet. Zum Training erhält die Lernmaschine als Eingangsvektor insbesondere einen Rilltyp oder Schnitttyp, z.B. entsprechend gekennzeichnete Vorlagen insbesondere aus vorhergehenden Messungen, sowie optional weitere Parameter wie Wellpappendicke oder Rillkörperabstand. Der Repräsentant ist dann der Ausgangsvektor der Lernmaschine. Die eigentliche Klassifizierung einer Anomalie erfolgt dann nicht mit dieser Lernmaschine, sondern wie oben bereits verschiedentlich beschrieben und möglicherweise mit einer zweiten Lernmaschine. Mit anderen Worten: die Lernmaschine errechnet einen Repräsentanten, welcher separat von dieser Errechnung des Repräsentanten mit einem gemessenen Höhenprofil verglichen wird, um dessen Ähnlichkeit mit dem Repräsentanten zu bestimmen und damit auch die Ähnlichkeit des Rilltyps (oder Schnitttyps) mit der Anomalie. In einer vorteilhaften Ausgestaltung berechnet die Lernmaschine den Repräsentanten als Funktion der Position einerseits und zusätzlich als Funktion des Rillkörperabstands.

Unabhängig von der konkreten Durchführung der Klassifizierung wird bereits anhand der beschriebenen, optionalen Erkennung des Nulltyps deutlich, dass mit der Klassifizierung abseits von Schnitten und Rillen jegliche Ausprägungen der Bahn grundsätzlich erkennbar und klassifizierbar sind, speziell auch eine Beschädigung der Bahn. Hierzu werden lediglich entsprechende Repräsentanten oder gekennzeichnete Messwerte (d.h. korrekt identifizierte Ausschnitte des Höhenprofils) verwendet und die Klassifizierung wie beschrieben durchgeführt. Gleiches gilt für die nachfolgend beschriebene Validierung des Ergebnisses der Klassifizierung.

Validierung mit dem Validierungsmodul

Die zuvor beschriebene Zuordnung und/oder Klassifizierung werden vorteilhafterweise zusätzlich mit dem Validierungsmodul validiert. Darunter wird verstanden, dass die jeweilige Zuordnung der Anomalien an den erkannten Bearbeitungspositionen zu einem Schnitt- und/oder Rilltyp mit den Auftragsdaten, speziell mit den an den vorgegebenen Bearbeitungsposition vorgegebenen Schnitten und/oder Rillungen, verglichen wird und insbesondere auch bewertet wird. Die Validierung erfolgt insbesondere basierend auf der Zuordnung von erkannten zu vorgegebenen Bearbeitungspositionen, welche mit dem weiter oben erwähnten Zuordnungsmodul durchgeführt wurde, einerseits und andererseits auf der Klassifizierung der Anomalien, d.h. deren Zuordnung zu bestimmten Schnitt- und/oder Rilltypen.

Mit dem Validierungsmodul werden geeigneterweise die Abstände zwischen einer jeweiligen erkannten Bearbeitungsposition und der zugeordneten vorgegebenen Bearbeitungsposition errechnet und dann aus sämtlichen Abständen ein Maß bestimmt, z.B. das Maximum oder den Mittelwert oder vergleichbares, und dieses Maß mit einem weiteren (dritten) Schwellwert verglichen. Erreicht das Maß nicht den Schwellwert, so gilt die Zuordnung als valide (d.h. ist validiert), andernfalls als nicht valide, und analog der Auftrag hinsichtlich der Bearbeitungsposition als ordnungsgemäß ausgeführt beziehungsweise fehlerhaft. Das Validierungsmodul gibt dann insbesondere einen entsprechenden Hinweis aus. Vorzugsweise wird für jede einzelne vorgegebene Bearbeitungsposition ausgegeben, ob diese valide ist oder nicht, d.h. korrekt durchgeführt wurde oder nicht.

Alternativ oder zusätzlich wird mit dem Validierungsmodul in gleicher Weise die Ähnlichkeit eines jeweils erkannten Schnitt- und/oder Rilltyps mit dem in den Auftragsdaten an dieser Bearbeitungspositionen jeweils geforderten (d.h. dem vorgegebenen) Schnitt- und/oder Rilltyp errechnet und dann die Ähnlichkeit vorzugsweise für jede vorgegebene Bearbeitungsposition separat mit einem weiteren (vierten) Schwellwert verglichen. Erreicht die Ähnlichkeit den Schwellwert, so gilt die Klassifizierung als valide, andernfalls als nicht valide und analog der Auftrag hinsichtlich des Schnitt- und/oder Rilltyps als ordnungsgemäß ausgeführt beziehungsweise fehlerhaft. Das Validierungsmodul gibt dann einen entsprechenden Hinweis aus. Grundsätzlich ist es auch vorteilhaft, aus den mehreren Ähnlichkeiten ein einzelnes Maß abzuleiten, z.B. den Mittelwert, und lediglich diesen mit dem Schwellwert zu vergleichen, um auf einfache Weise den Auftrag insgesamt zu validieren.

Bei Unstimmigkeiten der erkannten Bearbeitungspositionen und/oder der erkannten Schnitt- und/oder Rilltypen mit den Auftragsdaten wird zweckmäßigerweise ein Hinweis über ein Ausgabeelement, z.B. als Teil eines Human-Machine-Interface (HMI) an einen Bediener ausgegeben, z.B. in einen Leitstand der Anlage weitergeleitet. Vorzugsweise werden solche Informationen über Unstimmigkeiten, mit geeigneten Kennzahlen (Timestamp, Ausprägung, etc.) für weitere Analysen oder Präprozessoren (Machine Learning, Training für eine Lernmaschine, Predictive und Prescriptive Analytics) in einer Datenbank gespeichert.

Vorzugsweise weist die Anlage ein Eingabeelement auf, z.B. ebenfalls als Teil des HMI, über welches die ausgegebenen Hinweise, die gemessenen Höhenprofile, die Ergebnisse der Positionserkennung, der Zuordnung, der Klassifizierung und/oder der Validierung von einem Bediener mit zusätzlichen Informationen, z.B. Kennzahlen oder Kennzeichen, insbesondere "just-in-time" kennzeichenbar sind (auch als "labeling" bezeichnet), um relevante Informationen zu Produktions-, Prozess- und Produktqualität zu ergänzen oder überhaupt erst verfügbar zu machen und speziell um die weiter oben erwähnten Vorlagen zu erzeugen. Diese Informationen werden vorzugsweise in einer Datenbank gespeichert und für weitere Auswertungen und Lernverfahren herangezogen, z.B. das oben beschrieben Training der Lernmaschine.

Die genannten Informationen eignen sich auch zur Weitergabe an ein oder mehrere übergeordnete Systeme, um auch abseits des Betriebs der Anlage und der Bearbeitung der Bahn damit genutzt zu werden, z.B. bei einer Produktionsplanung oder der Erzeugung oder Anpassung von Auftragsdaten.

Die genannte Datenbank ist beispielsweise als eine Cloud-Lösung und dann separat von der Anlage realisiert oder als Teil davon uns somit als On-Premise-Lösung. Das Verfahren selbst und insbesondere auch das Computerprogrammprodukt werden zweckmäßigerweise auf der Anlage selbst ausgeführt. Alternativ oder zusätzlich sind das Verfahren selbst und insbesondere auch das Computerprogrammprodukt als Cloudlösung realisiert, an welche die Anlage angebunden ist.

Das erfindungsgemäße Computerprogrammprodukt weist Befehle auf, welche bei der Ausführung durch einen Computer diesen veranlassen, insbesondere das oben beschriebene Verfahren teilweise oder vollständig auszuführen. In einer geeigneten Ausgestaltung, veranlassen die Befehle bei der Ausführung durch einen Computer diesen in einem gemessenen Höhenprofil einer Bahn eine Anzahl von Anomalien zu identifizieren, indem solche Abschnitte des Höhenprofils jeweils als eine Anomalie identifiziert werden, in welchen das Höhenprofil einen vorgegebenen Schwellwert erreicht, und dann eine jeweilige Anomalie zu klassifizieren, indem diese einem Schnitt- und/oder Rilltyp (d.h. einem von mehreren Schnitt- und/oder Rilltypen) zugeordnet wird, welchem die Anomalie am ähnlichsten ist

Nachfolgend werden Ausführungsbeispiele der Erfindung anhand einer Zeichnung näher erläutert. Darin zeigen jeweils schematisch:

Fig. 1 ein Verfahren,

Fig. 2 ein Prozessschema,

Fig. 3 eine Anlage,

Fig. 4 ausschnittsweise zwei Höhenprofile,

Fig. 5 einen Rillkörper in einer Querschnittansicht,

Fig. 6 zwei Ansichten einer Sensoreinheit der Anlage aus Fig. 3,

Fig. 7 ein Höhenprofil und dessen Spektrogramm,

Fig. 8 bis 10 je einen Vergleich zweier Höhenprofile mit je einem Repräsentanten,

Fig. 11 eine Vielzahl von Höhenprofilen zu demselben Rilltyp,

Fig. 12 eine Lernmaschine,

Fig. 13 ein Repräsentant.

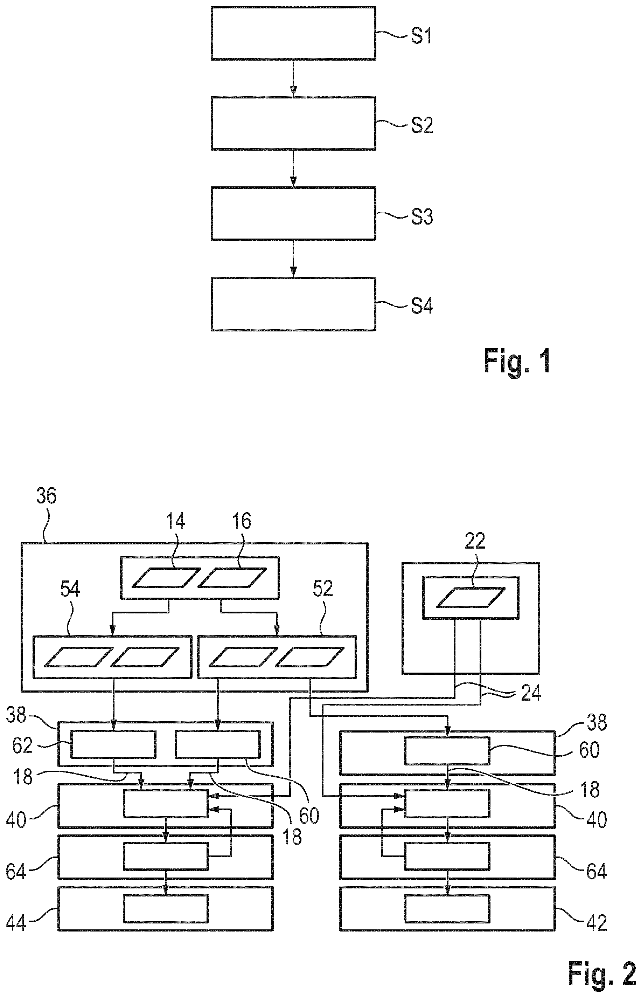

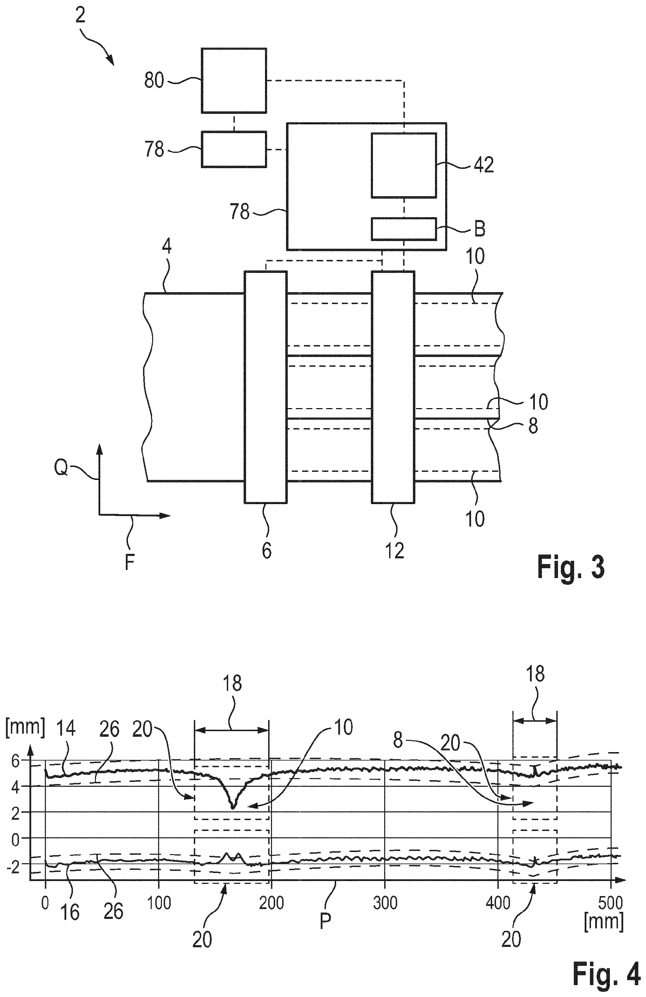

Fig. 1 zeigt ein Ausführungsbeispiel für ein erfindungsgemäßes Verfahren. Fig. 2 zeigt dann ein Prozessschema mit weiteren Details des Verfahrens. Fig. 3 zeigt eine beispielhafte Anlage 2, in welcher das Verfahren realisiert ist. Zunächst wird in einem ersten Schritt S1 eine Bahn 4 bereitgestellt, in welche mittels einer Schneid-/Rilleinheit 6 der Anlage 2 eine Anzahl von Bearbeitungen 8, 10 eingebracht wurde, jeweils anhand eines vorgegebenen Schnitttyps oder Rilltyps. Unter "eine Anzahl von" wird hier und auch allgemein "ein oder mehrere" oder "wenigstens ein/eine" verstanden. Die Bearbeitungen 8, 10 sind mechanische Bearbeitungen der Bahn 4 und vorliegend jeweils entweder ein Schnitt 8 oder eine Rillung 10 in der Bahn 4. Jeder Schnitt 8 wurde gemäß einem vorgegebenen Schnitttyp erzeugt und jede Rillung 10 gemäß einem vorgegebenen Rilltyp. Die Schnitte 8 und Rillungen 10 dienen zur Konfektionierung der Bahn 4 in einzelne Nutzen oder Bögen und zur Ausbildung von Bruch-, Falz- oder Knickkanten der Nutzen oder der späteren Bögen, z.B. um diese jeweils zu einer Schachtel, Box oder ähnlichem zu formen.

Im gezeigten Ausführungsbeispiel wird mit der Schneid-/Rilleinheit 6 die Bahn 4 sowohl geschnitten als auch gerillt. Die Anlage 2 ist vorliegend eine Wellpappenanlage, zur Herstellung von Wellpappe, speziell Bögen aus Wellpappe. Die Bahn 4 ist aus Papier hergestellt und eine Wellpappenbahn, welche aus mehreren Papierlagen zusammengesetzt ist. Wie in Fig. 3 erkennbar ist, wird stromab der Schneid-/Rilleinheit 6 mittels einer Sensoreinheit 12 inline ein Höhenprofil 14, 16 der Bahn 4 gemessen, genauer gesagt zwei Höhenprofile 14, 16, nämlich ein oberes Höhenprofil 14 auf einer Oberseite der Bahn 4 und ein unteres Höhenprofil 16 auf einer Unterseite der Bahn 4.

Die Bahn 4 wird mittels der Schneid-/Rilleinheit 6 an einer Anzahl von Bearbeitungspositionen 18 (d.h. Schnitt- und/oder Rillpositionen) bearbeitet. An jeder tatsächlichen Bearbeitungsposition 18 ist prinzipbedingt eine Anomalie 20 ausgebildet. Diese tatsächlichen Bearbeitungspositionen 18 werden zusammen mit den Anomalien 20 erkannt und dann auch als erkannte Bearbeitungspositionen 18 bezeichnet. Die Bearbeitungspositionen sind durch Auftragsdaten 22 für einen Auftrag für die Anlage 2 vorgegeben. Entsprechend enthalten die Auftragsdaten 22 dann vorgegebene Bearbeitungspositionen 24. Auch der an einer jeweiligen Bearbeitungsposition 24 auszuführende Schnitt- oder Rilltyp ist in den Auftragsdaten 22 vorgegeben, sodass in den Auftragsdaten 22 jeder vorgegebenen Bearbeitungsposition 24 auch ein vorgegebener Schnitt- oder Rilltyp zugeordnet ist. Die Schneid-/Rilleinheit 6 wird gemäß den Auftragsdaten 22 angesteuert. Aufgrund von Fehlern oder Ungenauigkeiten erzeugt die Schneid-/Rilleinheit 6 jedoch die Bearbeitungen 8, 10 nicht zwingend derart, dass die vorgegebenen Bearbeitungspositionen 24 mit den tatsächlichen Bearbeitungspositionen 18 übereinstimmen und möglicherweise wird auch der jeweils geforderte Schnitt- oder Rilltyp nicht exakt reproduziert oder sogar ein falscher Schnitt- oder Rilltyp verwendet.

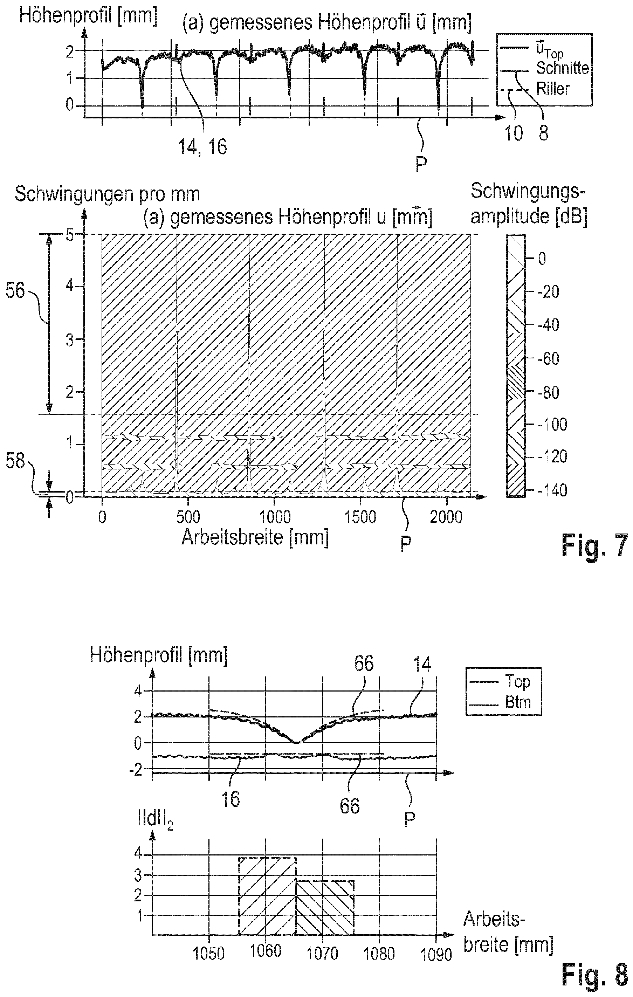

Bei dem hier beschriebenen Verfahren wird mit der Sensoreinheit 12 in einem zweiten Schritt S2 auf beiden Seiten der Bahn 4 und quer zu einer Förderrichtung F der Bahn 4 jeweils ein Höhenprofil 14, 16 gemessen. Ein Beispiel für solche Höhenprofile 14, 16 ist in Fig. 4 gezeigt, in welcher an zwei tatsächlichen Bearbeitungspositionen 18 je zwei Anomalie 20 erkennbar sind, d.h. insgesamt zwei Anomalienpaare, von denen eines zu einem Schnitt 8 gehört und das andere zu einer Rillung 10, genauer gesagt einer Drei-Punkt-Rillung. Weitere Höhenprofile 14, 16 sind auch in den Fig. 7 bis 10 gezeigt.

Wie in Fig. 4 erkennbar ist, sind in dem jeweiligen Höhenprofil 14, 16 die Bearbeitungen 8, 10 durch die Schneid-/Rilleinheit 6 als Anomalien 20 erkennbar, d.h. als Abweichungen von einem Normalzustand der Bahn. In den Höhenprofilen 14, 16 werden nun in einem dritten Schritt S3 die Anomalien 20 identifiziert, indem solche Ausschnitte der Höhenprofile 14, 16 jeweils als eine Anomalie 20 identifiziert werden, in welchen das jeweilige Höhenprofil 14, 16 einen vorgegebenen (ersten) Schwellwert 26 erreicht, d.h. je nach Betrachtung über- oder unterschreitet. Wie in Fig. 4 durch die gestrichenen Rahmen gekennzeichnet ist, ist der Ausschnitt nicht lediglich derjenige Bereich, in welchem das Höhenprofil 14, 16 tatsächlich den Schwellwert 26 erreicht, sondern enthält eine bestimmte Zugabe nach beiden Seiten.

In Fig. 4 ist das Erreichen des Schwellwerts 26 besonders deutlich für die Rillung 10. Der Schnitt 8 hingegen, wird nicht unbedingt wie gezeigt erkannt, sondern kann auch auf andere Weise identifiziert werden, wie weiter unten noch beschrieben wird.

In einem vierten Schritt S4 wird dann eine jeweilige Anomalie 20 klassifiziert, indem diese demjenigen Schnitt- und/oder Rilltyp zugeordnet wird, welchem die Anomalie 20 am ähnlichsten ist. Es wird also nicht lediglich geprüft, ob oder wie sehr eine jeweilige Bearbeitung 8, 10 dem Schnitt- oder Rilltyp gemäß den Auftragsdaten 22 entspricht, sondern es wird geprüft, welcher Schnitt- oder Rilltyp tatsächlich vorliegt (gegebenenfalls mit Angabe eines Konfidenzwerts hierfür). Diese Klassifizierung unterscheidet sich somit von einem einfachen Soll/Ist-Abgleich dadurch, dass die Anomalie 20 nicht lediglich mit einem einzelnen Schnitt- oder Rilltyp verglichen wird, sondern mit mehreren verschiedenen. Außerdem wird vorliegend durch Verwendung des Schwellwerts 26 aktiv nach Anomalien 20 im gesamten Höhenprofil 14, 16 gesucht und nicht lediglich das Höhenprofil 14, 16 an den vorgegebenen Bearbeitungspositionen 24 untersucht.

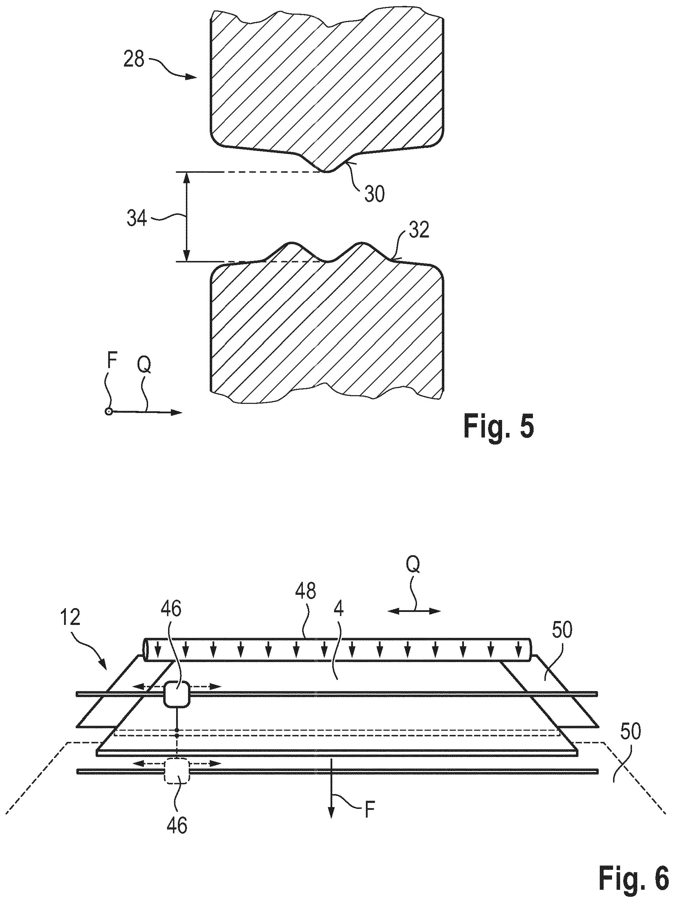

Zum Schneiden und/oder Rillen weist die Schneid-/Rilleinheit 6 einen oder mehrere entsprechende Schneidkörper und/oder Rillkörper 28 auf. In beiden Fällen erfolgt eine mechanische Bearbeitung der Bahn 4, im Fall des Schneidens lediglich ein Trennen und im Fall des Rillens eine Umformung. Ein Schneidkörper weist typischerweise wenigstens ein Messer auf, welches zur Erzeugung eines Schnitts 8 in die Bahn 4 eingefahren wird. Analog weist ein Rillkörper 28 regelmäßig zwei profilierte Laufflächen 30, 32 auf, welche auf gegenüberliegenden Seiten der Bahn 4 angeordnet sind und zusammenwirken. Ein Beispiel für einen Rillkörper 28 für eine Drei-Punkt-Rillung ist in Fig. 5 gezeigt. Durch eine Verschiebung der Laufflächen 30, 32 eines Rillkörpers 28 in Querrichtung Q ist auch eine sogenannte Offset-Rillung möglich. Die Verschiebung wird auch als Offset bezeichnet. Eine weitere Verschiebung ist regelmäßig auch senkrecht sowohl zur Querrichtung Q als auch zur Förderrichtung F möglich, um den sogenannten Rillkörperabstand 34 einzustellen.

Nachfolgend werden verschiedene Aspekte und Ausgestaltungen des Verfahrens im Detail beschrieben, wofür speziell auf Fig. 2 verwiesen wird. Zur Auswertung eines Höhenprofils 14, 16 und zur Erkennung von Anomalien 20 darin wird das Höhenprofil 14, 16 zunächst im Rahmen einer Vorverarbeitung 36, welche vorliegend Methoden der digitalen Signalverarbeitung verwendet, aufbereitet und auch gefiltert. Anschließend werden im Höhenprofil 14, 16 mittels einer Positionserkennung 38, welche vorliegend statistische Methoden anwendet, erkannte Bearbeitungspositionen 18 identifiziert, demnach werden hier auch die Anomalien 20 identifiziert. Anschließend erfolgt noch eine Zuordnung 40 der erkannten Bearbeitungspositionen 18 zu den vorgegebenen Bearbeitungspositionen 24 aus den Auftragsdaten 22. Die Positionserkennung 38 und die Zuordnung 40 werden in Fig. 2 getrennt einmal für Schnitte 8 und einmal für Rillungen 10 ausgeführt, eine Aufteilung der Anomalien 20 auf zwei entsprechende Gruppen erfolgt bereits durch die Vorverarbeitung 36.

Für eine weiterführende Analyse erfolgt bei dem hier beschriebenen Verfahren die bereits genannte Klassifizierung 42, mittels welcher hinsichtlich der durchgeführten Bearbeitungen 8, 10 das Höhenprofil 14, 16 abschnittsweise an den erkannten Bearbeitungspositionen 18 klassifiziert wird, d.h. die Anomalien 20 werden klassifiziert. Im Ausführungsbeispiel der Fig. 2 werden lediglich die Rillungen 10 klassifiziert, eine Klassifizierung der Schnitte 8 erfolgt nicht, ist aber optional ebenfalls realisiert. Die Schnitte 8, genauer gesagt deren Bearbeitungspositionen 18, werden vorliegend lediglich mit einer Validierung 44 validiert. Optional erfolgt noch eine Validierung des Ergebnisses der Klassifizierung 42, dies ist jedoch in Fig. 2 nicht explizit gezeigt, jedoch analog zur bereits genannten Validierung 44 möglich. Bei der Validierung 44 der Bearbeitungspositionen 18 wird ein Hinweis ausgegeben, die Anlage 2 gestoppt oder eine andere geeignete Maßnahme eingeleitet, sobald festgestellt wird, dass die erkannten Bearbeitungspositionen 18 innerhalb einer gegebenen Toleranz mit den vorgegebenen Bearbeitungspositionen 24 aus den Auftragsdaten 22 nicht übereinstimmen. Die Validierung des Ergebnisses der Klassifizierung 42 anhand der Auftragsdaten 22 erfolgt analog zur Validierung 44 der Bearbeitungspositionen 18, d.h. es wird überprüft, ob der korrekte Schnitt- oder Rilltyp angewendet wurde und/oder korrekt ausgeführt wurde und ob die Schnitte 8 und Rillungen 10 mit dem korrekten Schnitt- oder Rillkörper 28 hergestellt wurden. Sobald im Rahmen dieser Validierung festgestellt wird, dass die erkannten Bearbeitungen 8, 10 innerhalb einer gegebenen Toleranz mit den vorgegebenen Schnitt- und/oder Rilltypen aus den Auftragsdaten 22 nicht übereinstimmen, wird ein entsprechender Hinweis ausgegeben, die Anlage 2 gestoppt oder eine andere geeignete Maßnahme eingeleitet.

## Messung (erster Schritt S1)

Das Höhenprofil 14, 16 wird beispielsweise mit einer Sensoreinheit 12 wie in Fig. 6 gezeigt gemessen. In Fig. 6 ist links die Sensoreinheit 12 in Förderrichtung F betrachtet gezeigt und rechts in Querrichtung Q senkrecht zur Förderrichtung F betrachtet. Die Sensoreinheit 12 weist zwei Sensoren 46 auf, hier Abstandssensoren, speziell Lasertriangulationssensoren, welche quer zur Bahn 4 verschiebbar sind und in Richtung der Bahn 4 (d.h. auf diese zu) einen Abstand messen, d.h. die Entfernung zwischen Sensor 46 und Bahn 4. Der Sensor 46 gibt für jede Messposition quer über die Bahn 4 einen Messwert (Abstand) aus, welcher je nachdem, wie die Oberfläche der Bahn 4 beschaffen ist, variiert. Im Ergebnis gibt ein jeweiliger Sensor 46 somit ein Höhenprofil 14, 16 aus, welches eine Reihe von Messwerten enthält. Jedem Messwert wird auch eine Position P (Messposition) entlang der Bahn 4 zugeordnet. Ein Messwert bildet mit der zugehörigen Position P einen Datenpunkt. Die Sensoreinheit 12 ist vorliegend unmittelbar stromab der Schneid-/Rilleinheit 6 angeordnet. Außerdem weist die hier gezeigte Sensoreinheit 12 eine Anpresswalze 48 auf, um die Bahn 4 beim Durchlaufen der Sensoreinheit 12 und beim Messen des Höhenprofils 14, 16 gegen eine Auflage 50 zu drücken und eine etwaige Wölbung der Bahn 4 zumindest während der Messung so weit wie möglich zu unterdrücken.

## Vorverarbeitung (zweiter Schritt S2)

Bei der Vorverarbeitung 36 wird für die nachfolgende Positionserkennung 38 das gemessene Höhenprofil 14, 16 geeignet aufbereitet. Beispielsweise ist es möglich, dass bei der Messung des Höhenprofils 14, 16 eine Messbereichsüberschreitung stattfindet und kein Abstand gemessen werden kann, was regelmäßig bei einem Schnitt 8 der Fall ist, da an dessen Bearbeitungsposition 18 die Bahn 4 durchbrochen ist. Entsprechend kann bei einer Messbereichsüberschreitung gegebenenfalls kein gültiger Messwert erzeugt werden, stattdessen wird als Messwert ein NaN (not a number) zurückgegeben und im Höhenprofil 14, 16 findet sich an der zugehörigen Position P eine entsprechende Lücke. Bei der Vorverarbeitung 36 werden nun in einem Block 52 speziell solche Lücken im Höhenprofil 14, 16 entfernt, um ein lückenloses Höhenprofil 14, 16 zu erhalten. Die Lücken werden dabei jedoch nicht einfach ausgelassen, sondern durch geeignete Werte ersetzt. Außerdem wird im Block 52 das Höhenprofil 14, 16 auf ein äquidistantes Raster abgebildet. Dabei werden aus den Messwerten und Messpositionen neue Datenpunkte mit neuen (Mess-)Werten und neuen Positionen P erzeugt, welche entlang eines äquidistanten Rasters verteilt sind.

Die Vorverarbeitung 36 in Fig. 2 weist weiterhin einen weiteren Block 54 auf, in welchem die Lücken und deren Positionen P identifiziert werden.

Die Anomalien 20 sind auch im Frequenzraum erkennbar, speziell im Spektrogramm des Höhenprofils 14, 16. Ein beispielhaften Spektrogramm ist im unteren Teil von Fig. 7 gezeigt, im oberen Teil ist das zugehörige Höhenprofil 14, 16 gezeigt. In Fig. 7 beträgt die Datenpunktdichte des Höhenprofils 14, 16 beispielhaft zehn Datenpunkte pro Millimeter, wodurch das Spektrogramm in einem Frequenzbereich von 0 bis 5 mm$^{-1}$ (in vertikaler Richtung) darstellbar ist. Wie aus Fig. 7 deutlich wird, treten im Spektrogramm an den exakt gleichen Positionen P wie tatsächlich ausgeführte Schnitte 8 durchgehende Linien auf (parallel zur vertikalen Frequenzachse). Dies bedeutet, dass ein Schnitt 8 über das ganze Frequenzspektrum hinweg identifizierbar ist und dass durch Herausfiltern eines geeigneten Teilbereichs aus dem Frequenzspektrum (d.h. durch Selektion eines bestimmten Frequenzbereiches 56), in welchem lediglich die Frequenzen eines Schnitts 8 enthalten sind, der Einfluss dieses Schnittes 8 auf das gemessene Höhenprofil 14, 16 isoliert darstellbar ist und damit eine Identifizierung des Schnitts 8 ermöglicht. In einer möglichen Ausgestaltung wird daher ein entsprechender Frequenzbereich 56 mithilfe eines Bandpassfilters B freigestellt. In Fig. 7 reicht ein geeigneter Frequenzbereich 56 von 1,5 mm$^{-1}$ bis insbesondere 5 mm$^{-1}$, da in diesem Frequenzbereich 56 lediglich die Auswirkung der Schnitte 8 im Spektrogramm sichtbar sind und alle übrigen Einflüsse auf das Höhenprofil 14, 16 vollständig oder wenigstens überwiegend unterhalb dieses Frequenzbereichs 56 liegen. Entsprechend kommt es auf die Obergrenze nicht zwingend an, diese ist vielmehr durch die Datenpunktdichte vorgegeben. Analog sind auch an den Bearbeitungspositionen 18 von Rillungen 10 im Spektrogramm Auffälligkeiten im Frequenzbereich 58 von 0 mm$^{-1}$ bis etwa 0,1 mm$^{-1}$ erkennbar, sodass entsprechend in einer möglichen Ausgestaltung ein entsprechender Frequenzbereich 58 mithilfe eines Bandpassfilters B freigestellt wird. In Fig. 7 reicht ein geeigneter Frequenzbereich 58 von 0,001 mm$^{-1}$ (zur Unterdrückung des Gleichanteils im Höhenprofil 14, 16 bei 0 mm$^{-1}$) bis 0,1 mm$^{-1}$.

Positionserkennung (dritter Schritt S3)

Der Schwellwert 26 ist vorliegend eine Standardabweichung des jeweiligen Höhenprofils 14, 16. Die Standardabweichung bildet einen Schwellwert 26, welcher von der Position P abhängt und gleichsam eine Hüllkurve (vgl. Fig. 4) um das Höhenprofil 14, 16 bildet. Durchbricht das Höhenprofil 14, 16 diese Hüllkurve, erreicht also den Schwellwert 26, dann liegt an dieser Position P eine Anomalie 20 vor, welche auch als solche identifiziert wird. Diese Identifizierung einer Anomalie 20 durch Erreichen des Schwellwerts 26 erfolgt in Fig. 2 im Block 60. Der Schwellwert 26 und speziell dessen Bestimmung profitieren von der oben beschriebenen Filterung des Höhenprofils 14, 16 mittels eines Bandpasses, da dadurch das Höhenprofil 14, 16 auf die jeweils gesuchte Anomalie 20 (Schnitte 8 oder Rillen 16) begrenzt wird und deren Identifizierung mittels statistischer Methoden erleichtert wird. Die Positionen P der identifizierten Anomalien 20 des Höhenprofils 14, 16 werden auch als Kandidaten für erkannte Bearbeitungsposition 18 betrachtet, um nachfolgend mittels der Zuordnung 40 einer vorgegebenen Bearbeitungsposition 24 zugeordnet zu werden.

Zur Erkennung von Schnitten 8 werden im Block 60 in beiden Höhenprofile 14, 16 getrennt Anomalien 20 identifiziert und eine Anomalie 20 wird dann an einer Bearbeitungsposition 18 als ein Schnitt 8 erkannt, wenn an dieser Bearbeitungsposition 18 sowohl im oberen als auch im unteren Höhenprofil 14, 16 eine Anomalie 20 identifiziert wurde. Zusätzlich wird im Block 62 (Erkennung anhand einer Lücke) eine Anomalie 20 an einer Bearbeitungsposition 18 als ein Schnitt 8 erkannt, wenn im oberen oder im unteren Höhenprofil 14, 16 an dieser Bearbeitungsposition 18 eine Lücke vorliegt. Hierzu werden vom Block 54 die dort identifizierten Positionen P mit Lücken an den Block 62 übergeben. Die vorgenannten Kriterien werden miteinander verkettet, sodass das Vorliegen eines der Kriterien ausreichend ist, um einen Schnitt 8 zu erkennen.

Zur Erkennung von Rillungen 10 wird aus dem unteren und dem oberen Höhenprofil 14, 16 ein Differenzhöhenprofil errechnet und anschließend wie weiter oben beschrieben mit einem Bandpassfilter B gefiltert. Erreicht das Differenzhöhenprofil bei der Identifizierung im Block 60 an einer Bearbeitungsposition 18 den Schwellwert 26, so wird an dieser Bearbeitungsposition 18 eine Rillung 10 erkannt.

Mittels der beiden vorgenannten Schritte zur Erkennung von Schnitten 8 einerseits und Rillungen 10 andererseits werden die identifizierten Anomalien 20 noch vor der Klassifizierung 42 auf zwei Gruppen aufgeteilt, nämlich auf eine erste Gruppe, welche alle Anomalien 20 enthält, welche grundsätzlich als Schnitte 8 erkannt wurden (in Fig. 2 links), und eine zweite Gruppe, welche analog alle Anomalien 20 enthält, welche als Rillungen 10 erkannt wurden (in Fig. 2 rechts). Die Anomalien 20 werden demnach vorsortiert. In Fig. 2 wird dann nur die Gruppe von Anomalien 20, welche als Rillungen 10 erkannt wurden, klassifiziert, um jeder dieser Anomalie 20 einen konkreten Rilltyp zuzuordnen.

Zuordnung der Bearbeitungspositionen

Jeder Anomalie 20 ist eine tatsächliche Bearbeitungsposition 18 zugeordnet, welche durch die Identifizierung der Anomalie 20 erkannt wird und dann auch als erkannte Bearbeitungsposition 18 bezeichnet wird. Im Rahmen der Zuordnung 40 werden die tatsächlichen Bearbeitungspositionen 18 den vorgegebenen Bearbeitungspositionen 24 zugeordnet und diese hierzu gegenübergestellt. Hierfür wird z.B. eine Korrelationstabelle erzeugt, welche die Ähnlichkeit jeder tatsächlichen Bearbeitungsposition 18 zu jeder vorgegebenen Bearbeitungsposition 24 enthält. Beispielsweise ist die Korrelationstabelle eine einfache Abstandstabelle, welche die Abstände jeder tatsächlichen Bearbeitungsposition 18 zu jeder vorgegebenen Bearbeitungsposition 24 enthält. Einer jeweiligen tatsächlichen Bearbeitungsposition 18 wird dann diejenige vorgegebene Bearbeitungsposition 24 zugeordnet, welche der tatsächlichen Bearbeitungsposition 18 am ähnlichsten ist, d.h. zu dieser die größte Ähnlichkeit aufweist, z.B. zu dieser den geringsten Abstand aufweist. Dabei wird eine Doppelzuordnung vermieden, sodass jeder tatsächlichen Bearbeitungsposition 18 höchstens eine vorgegebene Bearbeitungsposition 24 zugeordnet wird und umgekehrt ebenso.

Mittels der Gegenüberstellung werden auch etwaige überschüssige Bearbeitungspositionen erkannt, d.h. solche Bearbeitungspositionen 18, welche zwar erkannt wurden, jedoch keiner vorgegebenen Bearbeitungsposition 24 in den Auftragsdaten 22 zugeordnet werden können. Dies können z.B. auch Anomalien 20 sein, welche nicht durch die Schneid-/Rilleinheit 6 erzeugt wurden. Umgekehrt werden analog fehlende vorgegebene Bearbeitungspositionen 24 erkannt. Hierzu wird in Fig. 2 speziell der Block 64 verwendet, welcher ein Feedback zur Zuordnung 40 erzeugt, um gegebenenfalls einen oder mehrere Parameter (z.B. Schwellwert 26, Grenzwert (siehe nachfolgend), Suchbereich im Höhenprofil 14, 16) zur Identifizierung der Anomalien 20 anzupassen. Vorliegend wird zudem bei der Zuordnung 40 ein Grenzwert für die Ähnlichkeit festgelegt, welcher mindestens erreicht werden muss, um eine Zuordnung durchzuführen. Wird der Abstand als Maß für die Ähnlichkeit verwendet, ist der Grenzwert entsprechend ein Höchstabstand (z.B. 5 mm). Auf diese Weise wird eine erzwungene Zuordnung vermieden.

Klassifizierung (vierter Schritt S4)

Die erkannten Bearbeitungspositionen 18, welche optional wie beschrieben auch vorgegebenen Bearbeitungspositionen 24 zugeordnet wurden, werden nun klassifiziert und dadurch jeweils einem von mehreren Schnitttypen oder Rilltypen zugeordnet. Da typischerweise mehrere verschiedene Rillkörper 28 verwendet werden, werden entsprechend unterschiedliche Rillungen 10 und damit je nach Auftrag auch unterschiedliche Anomalien 20 erzeugt (analog für Schnitte 8). Dabei weist jeder Rillkörper 28 eine eigene Charakteristik auf, welche zu einer entsprechenden Charakteristik der damit erzeugten Anomalie 20 führt. Dabei weist ein Schnitt 8 im Vergleich zu einer Rillung 10 regelmäßig eine deutlich einfachere Charakteristik auf. Da ein Schnitt 8 im Wesentlichen eine Trennung der Bahn 4 an einer bestimmten Bearbeitungsposition 18 ist, ist es zunächst ausreichend, lediglich eine solche Trennung (z.B. mittels Lücken in den Messwerten) zu suchen. Eine Validierung mit den Auftragsdaten 22 ist - wie in Fig. 2 erkennbar - für Schnitte 8 damit grundsätzlich auch ohne eine Klassifizierung möglich. Auch ist es grundsätzlich möglich, ohne die Klassifizierung 42 Schnitte 8 von Rillungen 10 zu unterscheiden. Entsprechend werden im hier gezeigten Ausführungsbeispiel zunächst Schnitte 8 von Rillungen 10 unterschieden und anschließend werden lediglich diejenigen Anomalien 20 klassifiziert, an deren Bearbeitungspositionen 18 Rillungen 10 erkannt wurden. Daher wird nachfolgend vorrangig die Klassifizierung 42 von Rillungen 10 beschrieben. Für Schnitte 10 gelten die Ausführungen jedoch analog.

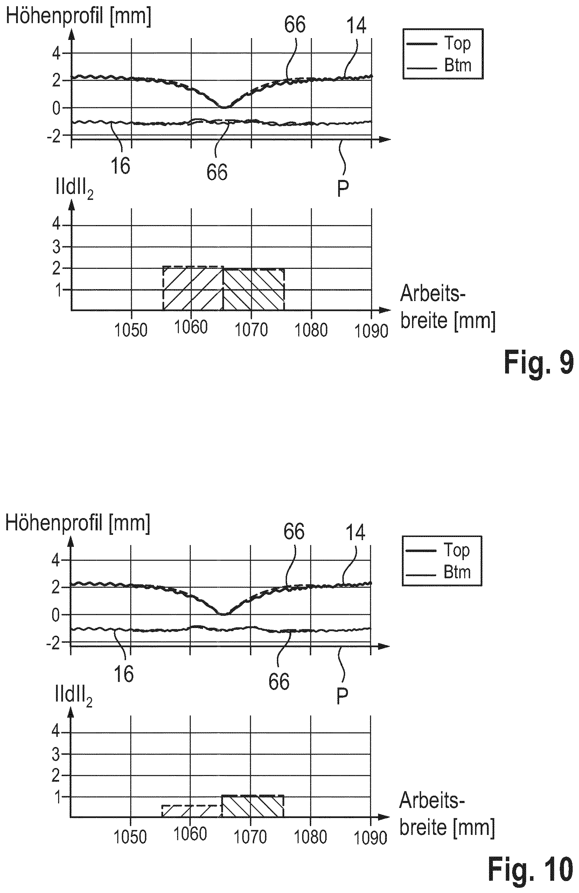

Für die Klassifizierung 42 wird in einer möglichen Ausgestaltung eine jeweilige Anomalie 20 mit einem Repräsentanten 66 eines jeweiligen Rilltyps verglichen und dabei die Ähnlichkeit (d.h. Übereinstimmung) der Anomalie 20 und des Rilltyps mittels einer Abstandsnorm berechnet. Dies ist exemplarisch in den Fig. 8, 9 und 10 gezeigt, welche jeweils im oberen Teil einen Vergleich zweier Höhenprofile 14, 16 je mit drei unterschiedlichen Repräsentanten 66 zeigen (also insgesamt sechs Repräsentanten 66), wobei immer zwei Repräsentanten 66 ein Paar bilden und einem bestimmten Rilltyp zugeordnet sind. Die Höhenprofile 14, 16 sind in allen drei Fig. 8, 9 und 10 gleich. Die gezeigten Rilltypen sind: Punkt-Flach-Rillung in Fig. 8, Punkt-Punkt-Rillung in Fig. 9, Drei-Punkt-Rillung in Fig. 10. Im unteren Teil sind jeweils die Ergebnispaare der Vergleiche als zwei Balken gezeigt, nämlich je dreimal ein Vergleich des oberen und unteren Höhenprofils 14, 16 mit einem entsprechenden Repräsentanten 66. Dabei wurde aus den Datenpunkten der jeweiligen Anomalie 20 und des jeweiligen Repräsentanten 66 an einer jeweiligen Position P (d.h. bei einem Vektor komponentenweise) eine Differenz gebildet und diese Differenzen werden dann für jedes der beiden Höhenprofil 14, 16 aufsummiert. Die beiden Summen einmal für das obere und einmal für das untere Höhenprofil 14, 16 sind dann als Balken dargestellt. Beim Vergleich der drei Balkenpaare wird deutlich, dass im Falle des Drei-Punkt-Profils in Fig. 10 insgesamt die geringste Gesamtsumme (Summer beider Summen der Differenzen) erzielt wird, d.h. die größte Ähnlichkeit besteht. Beide Anomalien 20 (d.h. das Anomalienpaar) werden daher dem Rilltyp Drei-Punkt-Rillung zugeordnet.

*Klassifizierung mit Modellierung*

Bei einer möglichen Ausgestaltung zur Klassifizierung 42 werden die Repräsentanten 66 mittels eines physikalischen Modells bestimmt, welches die Erzeugung von Rillungen 10 basierend auf einer Geometrie eines jeweiligen Rillkörper 28 simuliert. Zunächst wird für jeden Rilltyp auf Basis des zugehörigen Rillkörpers 28 ein Referenzmodell erstellt, welches alle relevanten Eigenschaften der entsprechenden Rillung 10 enthält. Das Referenzmodell dient dann als Repräsentant 66 für die Klassifizierung 42. Eine jeweilige Anomalie 20 wird dann mit verschiedenen Repräsentanten 66 verglichen (siehe Fig. 8, 9 und 10) und als derjenige Rilltyp klassifiziert, dessen Repräsentant 66 der Anomalie 20 am ähnlichsten ist. **In** einer möglichen Ausgestaltung wird der Repräsentant 66 aus Konstruktionsdaten des Rillkörpers 28 erzeugt, z.B. indem direkt dessen Kontur in Querrichtung Q wie in Fig. 5 erkennbar als Repräsentant 66 verwendet wird.

*Klassifizierung basierend auf Messwerten*

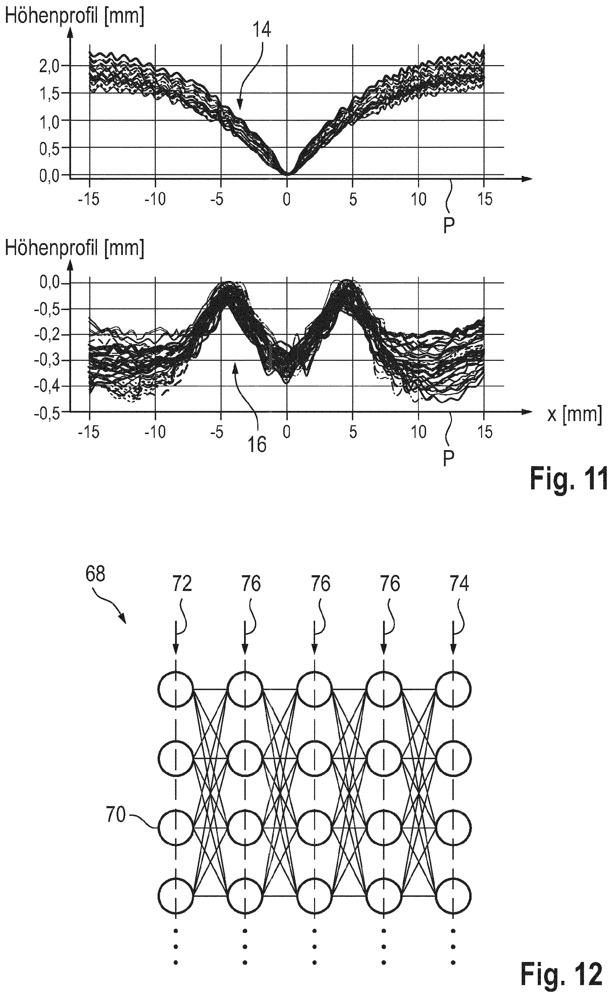

Bei einer anderen, möglichen Ausgestaltung zur Klassifizierung 42 wird der Repräsentant 66 eines jeweiligen Rilltyps anhand vorheriger Messwerte bestimmt, z.B. indem zu einem jeweiligen Rilltyp eine Vielzahl an Höhenprofilen 14, 16 z.B. wie in Fig. 11 gezeigt aufgenommen und aus diesen dann der Repräsentant 66 für diesen Rilltyp bestimmt wird, beispielsweise einfach als Mittelwert der Höhenprofile 14, 16. Optional werden zuvor noch etwaige Ausreißer eliminiert, z.B. indem solche Höhenprofile 14, 16, welche um einen bestimmten Schwellwert vom Mittelwert abweichen, ignoriert werden und dann erneut der Mittelwert der verbleibenden Höhenprofile 14, 16 gebildet wird und als Repräsentant 66 verwendet wird. Ebenso optional werden die Messwerte unterschiedlicher Positionen P bei der Berechnung der Ähnlichkeit unterschiedlich stark gewichtet, bevor dann wie oben beschrieben die Abstandsnorm gebildet wird. Insbesondere werden solche Positionen P stärker gewichtet, welche eine geringere Streuung aufweisen, in Fig. 11 sind das vor allem die Positionen P, an welchen das obere Höhenprofil 14 ein Minimum annimmt und das untere Höhenprofil 16 ein Maximum (in Fig. 11 zwei Maxima).

*Klassifizierung mit einer Lernmaschine*

Bei einer weiteren, möglichen Ausgestaltung zur Klassifizierung 42 wird eine Lernmaschine 68 verwendet, welche eine Anomalie 20 als Eingangsparameter erhält und als Ausgangsparameter dann den zugehörigen Rilltyp ausgibt. Eine beispielhafte Ausgestaltung für die Lernmaschine 68 ist in Fig. 12 gezeigt, darin ist die Lernmaschine 68 ein neuronales Netz, mit einer Vielzahl von Neuronen 70. Die Lernmaschine 68 ist vorliegend mittels eines überwachten Trainings trainiert.

Als Eingangsparameter für die Lernmaschine 68 wird eine jeweilige Anomalie 20 verwendet, d.h. ein Ausschnitt des Höhenprofils 14, 16. Die Eingangsparameter bilden einen Eingangsvektor. Vorliegend werden sogar beide Höhenprofile 14, 16 gleichzeitig verwendet, d.h. nicht nur eine Anomalie 20 im Höhenprofil 14, 16 auf einer Seite der Bahn 4, sondern zusätzlich hierzu auch die gegenüberliegende Anomalie 20. Dadurch verdoppeln sich entsprechend die Menge der Eingangsparameter und die Länge des Eingangsvektors. Die Schnitt- und/oder Rilltypen werden der Lernmaschine 68 durch eine One-Hot Kodierung zugänglich gemacht. Die Ausgangsparameter des neuronalen Netzes bilden dann entsprechend einen Ausgangsvektor mit einer Länge, welche der Anzahl an Rilltypen entspricht. Als Aktivierungsfunktion für die einzelnen Neuronen des neuronalen Netzes wird beispielsweise die ReLu-Funktion verwendet. Das neuronale Netz weist einen input layer 72 auf, zur Entgegennahme des Eingangsvektors und einen output layer 74, zur Ausgabe des Ausgangsvektors. Der input layer 72 und der output layer 74 sind über eine Anzahl von hier drei hidden layers 76 verbunden, z.B. mit in Richtung des output layer 74 abnehmender Anzahl an Neuronen 70. Die Lernmaschine 68 wird beispielsweise mit korrekt identifizierten Anomalien 20 trainiert und ist dann entsprechend eine mit überwachtem Training trainierte Lernmaschine 68.

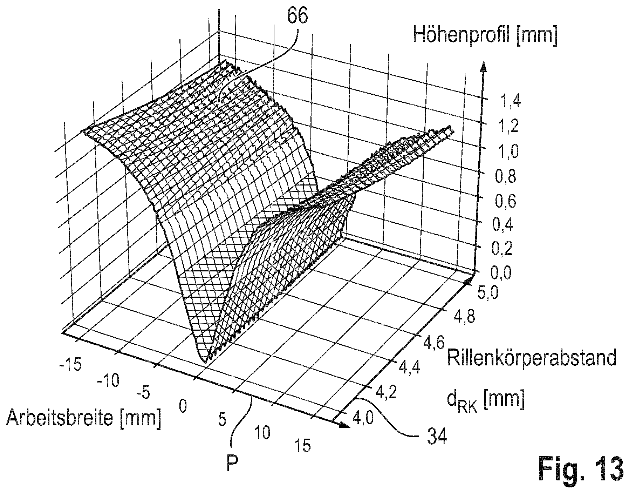

Möglich ist auch eine Ausgestaltung, bei welcher mit der Lernmaschine 68 der bereits genannte, jeweilige Repräsentant 66 eines Rilltyps berechnet wird, welcher dann wie weiter oben beschrieben zur Klassifizierung 40 verwendet wird, indem eine jeweilige Anomalie 20 mit dem Repräsentanten 66 verglichen wird. Die Lernmaschine 68 erzeugt demnach für jeden Rilltyp einen Repräsentanten 66 und wird insofern zur Modellierung verwendet. In Fig. 13 ist ein auf diese Weise berechneter Repräsentant 66 gezeigt, welcher eine Funktion der Position P einerseits und zusätzlich eine Funktion des Rillkörperabstands 34 ist.

Validierung

Die Validierung 44 erfolgt basierend auf der Zuordnung 40 von erkannten zu vorgegebenen Bearbeitungspositionen 18, 24, welche wie weiter beschrieben durchgeführt wurde, einerseits (in Fig. 2 für die Schnitttypen gezeigt) oder andererseits auf der Klassifizierung 42 der Anomalien 20, d.h. deren Zuordnung zu bestimmten Schnitt- und/oder Rilltypen (in Fig. 2 nicht explizit gezeigt).

Bei der in Fig. 2 gezeigten Validierung 44 werden die Abstände zwischen einer jeweiligen erkannten Bearbeitungsposition 18 und der zugeordneten vorgegebenen Bearbeitungsposition 24 errechnet und dann aus sämtlichen Abständen ein Maß bestimmt, z.B. das Maximum oder den Mittelwert oder Vergleichbares, und dieses Maß mit einem Schwellwert verglichen. Erreicht das Maß nicht den Schwellwert, so gilt die Zuordnung 40 als valide (d.h. ist validiert), andernfalls als nicht valide und analog der Auftrag hinsichtlich der Bearbeitungsposition 18, 24 als ordnungsgemäß ausgeführt beziehungsweise fehlerhaft.

Alternativ oder zusätzlich wird analog die Ähnlichkeit eines jeweils erkannten Schnitt- und/oder Rilltyps mit dem in den Auftragsdaten 22 an dieser Bearbeitungsposition 18 jeweils geforderten (d.h. dem vorgegebenen) Schnitt- und/oder Rilltyp errechnet und dann die Ähnlichkeit für jede vorgegebene Bearbeitungsposition 24 separat mit einem Schwellwert verglichen. Erreicht die Ähnlichkeit den Schwellwert, so gilt die Klassifizierung 42 als valide, andernfalls als nicht valide und analog der Auftrag hinsichtlich des Schnitt- und/oder Rilltyps als ordnungsgemäß ausgeführt beziehungsweise fehlerhaft.

Bei Unstimmigkeiten der erkannten Bearbeitungspositionen 24 und/oder der erkannten Schnitt- und Rilltypen mit den Auftragsdaten 22 wird ein Hinweis über ein Ausgabeelement, z.B. als Teil eines Human-Machine-Interface 78 an einen Bediener ausgegeben, z.B. in einen Leitstand der Anlage 2 weitergeleitet. Die hier gezeigte Anlage 2 weist zudem als Teil des Human-Machine-Interface 78 ein nicht explizit gezeigtes Eingabeelement auf, über welches die ausgegebenen Hinweise, die gemessenen Höhenprofile 14, 16, die Ergebnisse der Positionserkennung 36, der Zuordnung 40, der Klassifizierung 42 und/oder der Validierung 44 von einem Bediener mit zusätzlichen Informationen, z.B. Kennzahlen oder Kennzeichen, insbesondere "just-in-time" kennzeichenbar sind, um relevante Informationen zu Produktions-, Prozess- und Produktqualität zu ergänzen oder überhaupt erst verfügbar zu machen und speziell um die weiter oben erwähnten Vorlagen zu erzeugen. Diese Informationen werden in einer Datenbank 80 gespeichert und für weitere Auswertungen und Lernverfahren herangezogen.

Die Anlage 2 weist weiterhin eine Steuereinheit 82 auf, welche ausgebildet ist, das Verfahren wie beschrieben auszuführen.

Bezugszeichenliste

2    Anlage
4    Bahn

| | |
|---|---|
| 6 | Schneid-/Rilleinheit |
| 8 | Bearbeitung, Schnitt |
| 10 | Bearbeitung, Rillung |
| 12 | Sensoreinheit |
| 14 | oberes Höhenprofil |
| 16 | unteres Höhenprofil |
| 18 | tatsächliche/erkannte Bearbeitungsposition |
| 20 | Anomalie |
| 22 | Auftragsdaten |
| 24 | vorgegebene Bearbeitungspositionen |
| 26 | (erster) Schwellwert |
| 28 | Rillkörper |
| 30 | profilierte Lauffläche |
| 32 | profilierte Lauffläche |
| 34 | Rillkörperabstand |
| 36 | Vorverarbeitung |
| 38 | Positionserkennung |
| 40 | Zuordnung (der Bearbeitungspositionen) |
| 42 | Klassifizierung |
| 44 | Validierung |
| 46 | Sensor |
| 48 | Anpresswalze |
| 50 | Auflage |
| 52 | Block (der Vorverarbeitung) |
| 54 | weiterer Block (der Vorverarbeitung) |
| 56 | Frequenzbereich (für Schnitte) |
| 58 | Frequenzbereich (für Rillungen) |
| 60 | Block (Identifizierung einer Anomalie durch Erreichen des Schwellwerts) |
| 62 | Block (Erkennung anhand einer Lücke) |
| 64 | Block |
| 66 | Repräsentant |
| 68 | Lernmaschine |
| 70 | Neuron |
| 72 | input layer |
| 74 | output layer |
| 76 | hidden layer |
| 78 | Human-Machine-Interface |
| 80 | Datenbank |
| 82 | Steuereinheit |
| B | Bandpassfilter |
| F | Förderrichtung |
| P | Position |
| Q | Querrichtung |
| S1 | erster Schritt (Messung) |
| S2 | zweiter Schritt (Vorverarbeitung) |
| S3 | dritter Schritt |
| S4 | vierter Schritt |

**Patentansprüche**

1. Verfahren,

   - wobei eine Bahn (4) bereitgestellt wird, in welche mittels einer Schneid-/Rilleinheit (6) eine Anzahl von Bearbeitungen (8, 10) eingebracht wurde, jeweils anhand einer vorgegebenen Bearbeitungsposition (24) und eines vorgegebenen Schnitttyps oder Rilltyps,
   - wobei mit einer Sensoreinheit (12) auf zumindest einer Seite der Bahn (4) und quer zu einer Förderrichtung (F) der Bahn (4) ein Höhenprofil (14, 16) der Bahn (4) gemessen wird,
   **dadurch gekennzeichnet,**
   - **dass** in dem Höhenprofil (14, 16) eine Anzahl von Anomalien (20) und somit auch tatsächliche Bearbeitungspositionen (18) identifiziert werden, indem solche Ausschnitte des Höhenprofils (14, 16) jeweils als eine Anomalie (20) identifiziert werden, in welchen das Höhenprofil (14, 16) einen vorgegebenen Schwellwert (26) erreicht,
   - **dass** eine jeweilige Anomalie (20) mittels einer Klassifizierung (42) klassifiziert wird, indem die Anomalie (20) demjenigen Schnitttyp oder Rilltyp zugeordnet wird, welchem die Anomalie (20) am ähnlichsten ist.

2. Verfahren nach Anspruch 1,

   wobei zur Klassifizierung (42) eine Lernmaschine (68) verwendet wird, welche eine Anomalie (20) als Eingangsparameter erhält und als Ausgangsparameter dann den zugehörigen Schnitt- oder Rilltyp ausgibt,
   oder
   wobei mit einer Lernmaschine (68) ein jeweiliger Repräsentant (66) eines Rilltyps oder Schnitttyps berechnet wird, welcher dann zur Klassifizierung verwendet wird, indem eine jeweilige Anomalie (20) mit dem Repräsentanten (66) verglichen wird.

3. Verfahren nach Anspruch 2,

   wobei die Lernmaschine (68) ein neuronales Netz mit einer Vielzahl von Neuronen (70) ist,
   wobei als Aktivierungsfunktion für die einzelnen Neuronen (70) die ReLu-Funktion verwendet wird,
   wobei das neuronale Netz einen input layer (72) und einen output layer (74) aufweist,
   wobei das neuronale Netz mehrere hidden layers (76) aufweist, mit in Richtung des output layer (74) abnehmender Anzahl an Neuronen (70).

4. Verfahren nach Anspruch 1,

   wobei für die Klassifizierung (42) eine jeweilige Anomalie (20) mit einem Repräsentanten (66) eines jeweiligen Schnitt- oder Rilltyps verglichen wird und dabei die Ähnlichkeit der Anomalie (20) und des Schnitt- oder Rilltyps mittels einer Abstandsnorm berechnet wird,

- wobei der Repräsentant (66) eines jeweiligen Schnitt- oder Rilltyps anhand vorheriger Messwerte bestimmt, indem zu einem jeweiligen Schnitt- oder Rilltyp eine Vielzahl an Höhenprofilen (14, 16) aufgenommen und aus diesen dann der Repräsentant (66) für diesen Schnitttyp beziehungsweise Rilltyp bestimmt wird,

oder

- wobei die Repräsentanten (66) mittels eines physikalischen Modells bestimmt werden, welches die Erzeugung von Rillungen (10) und/oder Schnitten (8) basierend auf einer Geometrie eines jeweiligen Rillkörpers (28) beziehungsweise Schneidkörpers der Schneid-/Rilleinheit (6) simuliert.

5. Verfahren nach einem der Ansprüche 1 bis 4,

wobei die Ähnlichkeit eines jeweils erkannten Schnitt- und/oder Rilltyps mit dem jeweils vorgegebenen Schnitt- und/oder Rilltyp errechnet wird und dann die Ähnlichkeit für jede vorgegebene Bearbeitungsposition (24) separat mit einem weiteren Schwellwert verglichen wird, wobei die Klassifizierung (42) als valide gilt, falls die Ähnlichkeit den Schwellwert erreicht, und andernfalls als nicht valide.

6. Verfahren nach einem der Ansprüche 1 bis 5, wobei einer jeweiligen tatsächlichen Bearbeitungsposition (18) diejenige vorgegebene Bearbeitungsposition (24) zugeordnet wird, welche der tatsächlichen Bearbeitungsposition (18) am ähnlichsten ist.

7. Verfahren nach Anspruch 6, wobei ein Grenzwert für die Ähnlichkeit festgelegt ist, welcher mindestens erreicht werden muss, um eine Zuordnung (40) durchzuführen, um eine erzwungene Zuordnung zu vermeiden.

8. Verfahren nach Anspruch 6 oder 7,

wobei Abstände zwischen einer jeweiligen tatsächlichen Bearbeitungsposition (18) und der zugeordneten vorgegebenen Bearbeitungsposition (24) errechnet werden, wobei aus sämtlichen Abständen ein Maß bestimmt und dieses Maß mit einem weiteren Schwellwert verglichen wird, wobei die Zuordnung (40) als valide gilt, falls das Maß diesen weiteren Schwellwert nicht erreicht, und andernfalls als nicht valide.

9. Verfahren nach einem der Ansprüche 1 bis 8,

wobei das Höhenprofil (14, 16), bevor darin die Anomalien (20) identifiziert werden, mit einem Bandpassfilter (B) gefiltert wird, wobei der Bandpassfilter (B) einen Frequenzbereich (56, 58) freistellt, welcher derart gewählt ist, dass gezielt solche Anteile des Höhenprofils (14, 16) erhalten bleiben, welche entweder durch Schnitte (8) oder durch Rillungen (10) erzeugt werden.

10. Verfahren nach einem der Ansprüche 1 bis 9, wobei der Schwellwert (26) eine Standardabweichung des Höhenprofils (14, 16) ist.

11. Verfahren nach einem der Ansprüche 1 bis 10,

wobei in einem oberen Höhenprofil (14) auf einer Oberseite der Bahn (4) und in einem untere Höhenprofil (16) auf einer Unterseite der Bahn (4) getrennt Anomalien (20) identifiziert werden, wobei eine Anomalie (20) an einer Bearbeitungsposition (18) dann als ein Schnitt (8) erkannt wird, wenn an dieser Bearbeitungsposition (18) sowohl im oberen als auch im unteren Höhenprofil (14, 16) eine Anomalie (20) identifiziert wurde, und/oder wobei eine Anomalie (20) an einer Bearbeitungsposition (18) als ein Schnitt (8) erkannt wird, wenn im oberen oder im unteren Höhenprofil (14, 16) an dieser Bearbeitungsposition (18) eine Lücke vorliegt.

12. Verfahren nach einem der Ansprüche 1 bis 11,

wobei aus einem oberen Höhenprofil (14) auf einer Oberseite der Bahn (4) und einem unteren Höhenprofil (16) auf einer Unterseite der Bahn (4) ein Differenzhöhenprofil errechnet wird, wobei, wenn das Differenzhöhenprofil an einer Bearbeitungsposition (18) den Schwellwert (26) erreicht, an dieser Bearbeitungsposition (18) eine Anomalie (20) erkannt wird.

13. Verfahren nach einem der Ansprüche 1 bis 12,

wobei die Schneid-/Rilleinheit (6) und die Sensoreinheit (12) ein Teil einer Wellpappenanlage sind und wobei die Bahn (4) eine Wellpappenbahn ist, welche mit der Wellpappenanlage hergestellt und verarbeitet wird, wobei das Höhenprofil (14, 16) in der Wellpappenanlage inline und stromab der Schneid-/Rilleinheit (6) gemessen wird.

14. Anlage (2) mit welcher eine Bahn (4) bearbeitet wird, mit

einer Schneid-/Rilleinheit (6), einer Sensoreinheit (12) und

einer Steuereinheit (82), welche ausgebildet ist, ein Verfahren gemäß einem der Ansprüche 1 bis 13 auszuführen.

15. Computerprogrammprodukt, welches Befehle aufweist, welche bei der Ausführung durch einen Computer diesen veranlassen,

- in einem gemessenen Höhenprofil (14, 16) einer Bahn (4) eine Anzahl von Anomalien (20) und somit auch tatsächliche Bearbeitungspositionen (18) zu identifizieren, indem solche Abschnitte des Höhenprofils (14, 16) jeweils als eine Anomalie (20) identifiziert werden, in welchen das Höhenprofil (14, 16) einen vorgegebenen Schwellwert (26) erreicht,
- eine jeweilige Anomalie (20) mittels einer Klassifizierung (42) zu klassifizieren, indem die Anomalie (20) einem Schnitt- und/oder Rilltyp zugeordnet wird, welchem die Anomalie (20) am ähnlichsten ist.

**Claims**

1. Method,

- wherein a web (4) is provided, in which a number of machining operations (8, 10) have been made by means of a cutting/grooving unit (6), each based on a predefined machining position (24) and a predefined cut type or groove type,
- wherein a height profile (14, 16) of the web (4) is measured using a sensor unit (12) on at least one side of the web (4) and transversely to a conveying direction (F) of the web (4), **characterized**
- **in that** a number of anomalies (20) and thus also actual machining positions (18) are identified in the height profile (14, 16) by identifying each of those sections of the height profile (14, 16) in which the height profile (14, 16) reaches a predefined threshold value (26) as an anomaly (20),
- **in that** a respective anomaly (20) is classified by means of a classification (42) by assigning the anomaly (20) to that cut type or groove type to which the anomaly (20) is most similar.

2. Method according to Claim 1,

wherein a learning machine (68) is used for classification (42), which learning machine receives an anomaly (20) as an input parameter and then outputs the associated cut or groove type as an output parameter, or wherein a respective representative (66) of a groove type or cut type is calculated using a learning machine (68) and is then used for classification by comparing a respective anomaly (20) with the representative (66).

3. Method according to Claim 2,

wherein the learning machine (68) is a neural network having a multiplicity of neurons (70), wherein the ReLu function is used as an activation function for the individual neurons (70), wherein the neural network has an input layer (72) and an output layer (74), wherein the neural network has a plurality of hidden layers (76), with a decreasing number of neurons (70) in the direction of the output layer (74).

4. Method according to Claim 1, wherein for the classification (42) a respective anomaly (20) is compared with a representative (66) of a respective cut or groove type and the similarity of the anomaly (20) and the cut or groove type is calculated by means of a distance norm,

- wherein the representative (66) of a respective cut or groove type is determined on the basis of previous measured values by recording a multiplicity of height profiles (14, 16) for a respective cut or groove type and then determining the representative (66) for this cut type or groove type therefrom, or
- wherein the representatives (66) are determined by means of a physical model which simulates the creation of grooves (10) and/or cuts (8) based on a geometry of a respective grooved body (28) or cutting body of the cutting/-grooving unit (6).

5. Method according to one of Claims 1 to 4,

wherein the similarity of each recognized cut and/or groove type to the respectively predefined cut and/or groove type is calculated and then the similarity for each predefined machining position (24) is compared separately with a further threshold value, wherein the classification (42) is considered valid if the similarity reaches the threshold value, and is otherwise considered invalid.

6. Method according to one of Claims 1 to 5, wherein that predefined machining position (24) which is most similar to the actual machining position (18) is assigned to a respective actual machining position (18).

7. Method according to Claim 6,
wherein a limit value for the similarity is set and must be at least reached in order to perform an assignment (40) in order to avoid a forced assignment.

8. Method according to Claim 6 or 7,

wherein distances between a respective actual machining position (18) and the assigned predefined machining position (24) are calculated, wherein a measure is determined from all distances and this measure is compared with a further threshold value, wherein the assignment (40) is considered valid if the measure does not reach this further threshold value, and is otherwise considered invalid.

9. Method according to one of Claims 1 to 8,

wherein the height profile (14, 16) is filtered with a bandpass filter (B) before the anomalies (20) are identified therein,
wherein the bandpass filter (B) releases a frequency range (56, 58) which is selected in such a way that those portions of the height profile (14, 16) which are generated either by cuts (8) or by grooves (10) are specifically retained.

10. Method according to one of Claims 1 to 9,
wherein the threshold value (26) is a standard deviation of the height profile (14, 16).

11. Method according to one of Claims 1 to 10,

wherein anomalies (20) are identified separately in an upper height profile (14) on a top side of the web (4) and in a lower height profile (16) on an underside of the web (4),
wherein an anomaly (20) at a machining position (18) is recognized as a cut (8) when an anomaly (20) has been identified both in the upper and in the lower height profile (14, 16) at this machining position (18), and/or
wherein an anomaly (20) at a machining position (18) is recognized as a cut (8) when there is a gap in the upper or lower height profile (14, 16) at this machining position (18).

12. Method according to one of Claims 1 to 11,

wherein a difference height profile is calculated from an upper height profile (14) on a top side of the web (4) and a lower height profile (16) on an underside of the web (4),
wherein, if the difference height profile at a machining position (18) reaches the threshold value (26), an anomaly (20) is detected at this machining position (18).

13. Method according to one of Claims 1 to 12,

wherein the cutting/grooving unit (6) and the sensor unit (12) are part of a corrugated board plant, and wherein the web (4) is a corrugated board web which is produced and processed using the corrugated board plant,
wherein the height profile (14, 16) is measured inline and downstream of the cutting/grooving unit (6) in the corrugated board plant.

14. Plant (2) which is used to machine a web (4), having

a cutting/grooving unit (6), a sensor unit (12), and
a control unit (82) which is designed to carry out a method according to one of Claims 1 to 13.

15. Computer program product having instructions which, when executed by a computer, cause the latter

- to identify a number of anomalies (20) and thus also actual machining positions (18) in a measured height profile (14, 16) of a web (4) by identifying each of those sections of the height profile (14, 16) in which the height profile (14, 16) reaches a predefined threshold value (26) as an anomaly (20),
- to classify a respective anomaly (20) by means of a classification (42) by assigning the anomaly (20) to a cut and/or groove type to which the anomaly (20) is most similar.

**Revendications**

1. Procédé,

- une bande (4) étant fournie, dans laquelle un certain nombre de traitements (8, 10) ont été incorporés au moyen d'une unité de découpe/-rainurage (6), à chaque fois à l'aide d'une position de traitement prédéfinie (24) et d'un type de découpe ou d'un type de rainurage prédéfini,
- un profil de hauteur (14, 16) de la bande (4) étant mesuré au moyen d'une unité de détection (12) sur au moins un côté de la bande (4) et transversalement à une direction de transport (F) de la bande (4),
**caractérisé en ce**
- **qu'**un certain nombre d'anomalies (20) et ainsi également de positions de traitement réelles (18) sont identifiées dans le profil de hauteur (14, 16), en identifiant respectivement comme une anomalie (20) les sections du profil de hauteur (14, 16) dans lesquelles le profil de hauteur (14, 16) atteint une valeur de seuil (26) prédéfinie,

- **qu'**une anomalie (20) respective est classifiée au moyen d'une classification (42) en affectant l'anomalie (20) au type de découpe ou au type de rainure duquel l'anomalie (20) est la plus proche.

2. Procédé selon la revendication 1,

une machine d'apprentissage (68) étant utilisée pour la classification (42), laquelle obtient une anomalie (20) comme paramètre d'entrée et délivre ensuite en sortie le type de découpe ou le type de rainure associé comme paramètre de sortie,

ou

un représentant (66) respectif d'un type de rainure ou d'un type de découpe étant calculé avec une machine d'apprentissage (68), lequel est ensuite utilisé pour la classification en comparant une anomalie (20) respective avec le représentant (66).

3. Procédé selon la revendication 2,

la machine d'apprentissage (68) étant un réseau neuronal ayant une pluralité de neurones (70),

la fonction ReLu étant utilisée comme fonction d'activation pour les neurones (70) individuels,

le réseau neuronal possédant une couche d'entrée (72) et une couche de sortie (74),

le réseau neuronal possédant plusieurs couches cachées (76), avec un nombre décroissant de neurones (70) en direction de la couche de sortie (74).

4. Procédé selon la revendication 1,

pour la classification (42), une anomalie (20) respective étant comparée à un représentant (66) d'un type de découpe ou de rainure respectif et la similitude de l'anomalie (20) et du type de découpe ou de rainure étant ici calculée au moyen d'une norme d'écart,

- le représentant (66) d'un type de découpe ou de rainure respectif étant déterminé à l'aide de valeurs de mesure antérieures en enregistrant une pluralité de profils de hauteur (14, 16) pour un type de découpe ou de rainure respectif et en déterminant à partir de ceux-ci le représentant (66) pour ce type de découpe ou de rainure,

ou

- les représentants (66) étant déterminés au moyen d'un modèle physique, lequel simule la génération de rainures (10) et/ou de découpes (8) sur la base d'une géométrie d'un corps de rainure (28) ou d'un corps de coupe respectif de l'unité de découpe/rainurage (6).

5. Procédé selon l'une des revendications 1 à 4,

la similitude d'un type de découpe et/ou de rainure respectivement reconnu avec le type de découpe et/ou de rainure respectivement prédéfini étant calculée et la similitude pour chaque position de traitement prédéfinie (24) étant ensuite comparée séparément à une valeur de seuil supplémentaire,

la classification (42) étant considérée comme valide si la similitude atteint la valeur de seuil, et non valide dans le cas contraire.

6. Procédé selon l'une des revendications 1 à 5,
la position de traitement prédéfinie (24) qui est la plus similaire à la position de traitement effective (18) étant affectée à une position de traitement effective (18) respective.

7. Procédé selon la revendication 6,
une valeur limite pour la similitude étant spécifiée, laquelle qui doit au moins être atteinte pour effectuer une affectation (40) afin d'éviter une affectation forcée.

8. Procédé selon la revendication 6 ou 7,

les écarts entre une position de traitement effective (18) respective et la position de traitement prédéfinie (24) affectée étant calculés, une cote étant déterminée à partir de tous les écarts et cette cote étant comparée à une valeur de seuil supplémentaire,

l'affectation (40) étant considérée comme valide si la cote n'atteint pas cette valeur de seuil supplémentaire, et non valide dans le cas contraire.

9. Procédé selon l'une des revendications 1 à 8,

le profil de hauteur (14, 16) étant filtré au moyen d'un filtre passe-bande (B) avant que les anomalies (20) ne soient identifiées dans celui-ci, le filtre passe-bande (B) libérant une plage de fréquences (56, 58) qui est sélectionnée de telle sorte que les parties du profil de hauteur (14, 16) qui sont générées soit par des découpes (8), soit par des rainures (10), soient conservées de manière ciblée.

10. Procédé selon l'une des revendications 1 à 9,
la valeur de seuil (26) étant un écart type du profil de hauteur (14, 16).

11. Procédé selon l'une des revendications 1 à 10,

des anomalies (20) étant identifiées séparément dans un profil de hauteur supérieur (14) sur un côté supérieur de la bande (4) et dans un profil de hauteur inférieur (16) sur un côté inférieur de la bande (4),

une anomalie (20) au niveau d'une position de traitement (18) étant alors identifiée comme une découpe (8) si une anomalie (20) a été identifiée au niveau de cette position de traitement (18) à la fois dans le profil de hauteur supérieur et inférieur (14, 16), et/ou

une anomalie (20) au niveau d'une position de traitement (18) étant identifiée comme une découpe (8) si un espace est présent au niveau de cette position de traitement (18) dans le profil de hauteur supérieur ou inférieur (14, 16).

12. Procédé selon l'une des revendications 1 à 11,

un profil de différence de hauteur différentiel étant calculé à partir d'un profil de hauteur supérieur (14) sur un côté supérieur de la bande (4) et d'un profil de hauteur inférieur (16) sur un côté inférieur de la bande (4),

lorsque le profil de différence de hauteur atteint la valeur de seuil (26) au niveau d'une position de traitement (18), une anomalie (20) étant reconnue au niveau de cette position de traitement (18).

13. Procédé selon l'une des revendications 1 à 12, l'unité de découpe/rainurage (6) et l'unité de détection (12) faisant partie d'une installation de carton ondulé et la bande (4) étant une bande de carton ondulé qui est produite et traitée par l'installation de carton ondulé, le profil de hauteur (14, 16) dans l'installation de carton ondulé étant mesuré en ligne et en aval de l'unité de découpe/rainurage (6).

14. Installation (2) avec laquelle une bande (4) est traitée, comprenant

une unité de découpe/rainurage (6), une unité de détection (12) et

une unité de commande (82), laquelle est configurée pour mettre en œuvre un procédé selon l'une des revendications 1 à 13.

15. Produit de programme informatique, lequel possède des instructions qui, lors de l'exécution par un ordinateur, amènent ce dernier

- à identifier un certain nombre d'anomalies (20) et donc également des positions d'usinage effectives (18) dans un profil de hauteur (14, 16) mesuré d'une bande (4), en identifiant respectivement comme une anomalie (20) les portions du profil de hauteur (14, 16) dans lesquelles le profil de hauteur (14, 16) atteint une valeur seuil de (26) prédéfinie,

- à classifier une anomalie (20) respective au moyen d'une classification (42) en affectant l'anomalie (20) à un type de découpe et/ou de rainure duquel l'anomalie (20) est la plus proche.

**Fig. 1**

**Fig. 2**

**Fig. 3**

**Fig. 4**

28 →

30

34

32

F  Q

**Fig. 5**

Q

12

46

48  4

50

50

46

F

**Fig. 6**

Fig. 7

Fig. 8

Fig. 9

Fig. 10

Fig. 11

Fig. 12

Fig. 13

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102015200397 A1
- DE 102019105217 A1
- US 5581353 A
- DE 102019110721 A1
- KR 102358948 B1